(19) **Europäisches Patentamt**
**European Patent Office**
**Office européen des brevets**

(11) **EP 3 753 162 B1**

(12) **EUROPEAN PATENT SPECIFICATION**

(45) Date of publication and mention
of the grant of the patent:
**12.11.2025 Bulletin 2025/46**

(21) Application number: **19707892.6**

(22) Date of filing: **13.02.2019**

(51) International Patent Classification (IPC):
*H04L 1/18* *(2023.01)*

(52) Cooperative Patent Classification (CPC):
**H04L 1/1861; H04L 1/1896**

(86) International application number:
**PCT/SE2019/050120**

(87) International publication number:
**WO 2019/160483 (22.08.2019 Gazette 2019/34)**

(54) **SPS RELEASE HANDLING FOR CODE BLOCK GROUP-BASED DYNAMIC HARQ-ACK CODEBOOK**

HANDHABUNG VON SPS-FREIGABE FÜR CODEBLOCKGRUPPENBASIERTES DYNAMISCHES HARQ-ACK-CODEBUCH

TRAITEMENT DE LIBÉRATION SPS POUR LIVRE DE CODES HARQ-ACK DYNAMIQUE BASÉ SUR UN GROUPE DE BLOCS DE CODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2018 US 201862631053 P**

(43) Date of publication of application:
**23.12.2020 Bulletin 2020/52**

(73) Proprietor: **TELEFONAKTIEBOLAGET LM ERICSSON (PUBL)**
**164 83 Stockholm (SE)**

(72) Inventors:
• **CHEN LARSSON, Daniel**
**226 49 Lund (SE)**
• **BALDEMAIR, Robert**
**170 69 Solna (SE)**

(74) Representative: **Ericsson**
**Patent Development**
**Torshamnsgatan 21-23**
**164 80 Stockholm (SE)**

(56) References cited:
**WO-A1-2017/160350** **US-A1- 2017 134 140**

• **FUJITSU: "Clarification on Type-2 HARQ-ACK codebook determination in TS 38.213", vol. RAN WG1, no. Vancouver, Canada; 20180122 - 20180126, 12 January 2018 (2018-01-12), XP051384284, Retrieved from the Internet <URL:http://www.3gpp.org/ftp/tsg%5Fran/WG1%5FRL1/TSGR1%5FAH/NR%5FAH%5F1801/Docs/> [retrieved on 20180112]**
• **SPREADTRUM COMMUNICATIONS: "Remaining issues on HARQ-ACK codebook", vol. RAN WG1, no. Vancouver, Canada; 20180122 - 20180126, 12 January 2018 (2018-01-12), XP051384304, Retrieved from the Internet <URL:http://www.3gpp.org/ftp/tsg%5Fran/WG1%5FRL1/TSGR1%5FAH/NR%5FAH%5F1801/Docs/> [retrieved on 20180112]**

**Description**

BACKGROUND

Modern wireless communication systems such as High Speed Packet Access (HSPA), Long Term Evolution (LTE), and 5G New Radio (NR) employ a Hybrid Automatic Repeat ReQuest (HARQ) protocol in their Medium Access Control (MAC) layer. HARQ protocol is used to enhance transmission reliability.

In the system, a user equipment (UE) is notified by the network of downlink data transmission by the physical downlink control channel (PDCCH). Upon reception of a PDCCH in a particular subframe n, a UE is required to decode the corresponding physical downlink shared channel (PDSCH) and to send acknowledgment/not acknowledgment (ACK/-NACK) feedback in a subsequent subframe $n+k$. The ACK/NACK feedback informs the eNodeB whether the corresponding PDSCH was decoded correctly. When the eNodeB detects an ACK feedback, it can proceed to send new data blocks to the UE. When a NACK is detected by the eNodeB, coded bits corresponding to the original data block will be retransmitted. When the retransmission is based on repetition of previously sent coded bits, it is said to be operating in a Chase combining HARQ protocol. When the retransmission contains coded bits unused in previous transmission attempts, it is said to be operating in an incremental redundancy HARQ protocol.

In carrier aggregation, multiple component carriers are configured for one UE. Component carriers can be configured into so called physical uplink control channel (PUCCH) groups. HARQ feedback for all component carriers of a PUCCH group are transmitted on the same UL using PUCCH or UCI on physical uplink shared channel (PUSCH).

The ACK/NACK bits which should be reported on a single PUCCH are arranged into the HARQ codebook. A HARQ codebook can contain ACK/NACK bits from the same or different component carriers and from one or multiple time instances. NR defines mini-slots and mixing of multiple numerologies on one carrier, and both features can lead to irregular transmission timings complicating the HARQ codebook design. NR also introduces HARQ feedback per group of code blocks of a transport block, a feature called Code Block Group (CBG) feedback. The CBG size can range from one code block per CBG to one CBG per transport block (same as in LTE). CBG-based HARQ feedback can substantially increase the amount of HARQ feedback signaling.

In a semi-statically configured HARQ codebook, at least the number of bits in the component carrier dimension is typically fixed. As soon as the UE detects at least one DL assignment on any component carrier, it prepares a feedback bitmap that contains HARQ feedback of all configured or activated component carriers. Feedback for component carriers where no DL assignment has been detected for is set to NACK. The number of feedback bits required for one component carrier is given by its MIMO configuration and its CBG configuration. The number of HARQ feedback bits required for all configured/activated component carriers is the sum across all configured/activated component carrier of the feedback bits required per component carrier.

The number of entries in the time-domain can also be fixed or feedback is only reported for those time instances where at least one DL assignment is detected (on any of the configured/activated component carriers). In the latter case, a Downlink Assignment Index (DAI) is needed to protect against missed DL assignments. A DAI is contained in preferable all DL assignments and contains the number of time instances (e.g. slots) that has been scheduled up to (including) the current slot.

A semi-statically configured HARQ codebook is simple and robust but can lead to high overhead, especially if there are many component carriers and often not all of them are scheduled and/or some component carriers are configured with CBG.

LTE Rel-13 supports a very large number of aggregated component carriers. A semi-static configured (in component carrier dimension) HARQ codebook, as it has been used in earlier carrier aggregation, is sub-optimal since for the semi-statically configured HARQ codebook always feedback of all configured/activated component carriers is included. With a large number of configured/activated but only few scheduled component carriers, the HARQ codebook size becomes unnecessarily large.

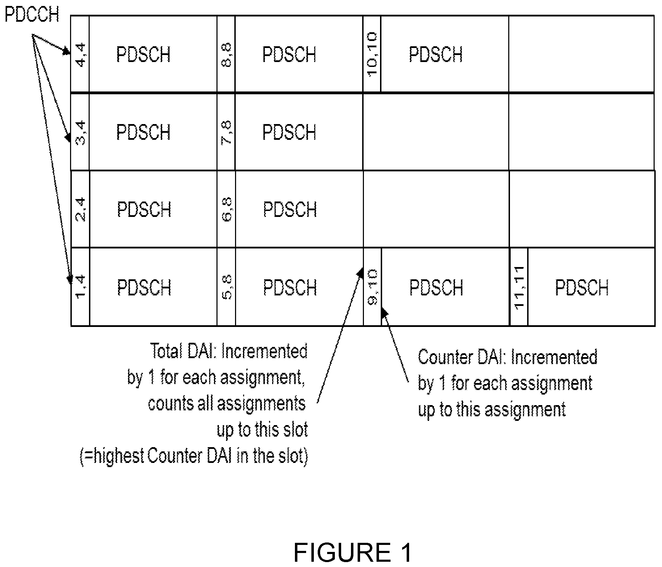

In Rel-13, a dynamic HARQ codebook (in both component carrier and time dimension) has been introduced. Here, each DL assignment (typically a DL assignment is carried in a DCI) contains a counter and total DAI field. The counter DAI field counts the number of DL assignments that has been scheduled so far (including the current DL assignment) for the current HARQ codebook. The component carriers are ordered (e.g. according to carrier frequency) and the counter DAI counts DL assignments in this order. Along the time axis, the counter DAI is not reset but is increased continuously at slot boundaries. The total DAI in each DL assignment is set to the total number of DL assignments that have been scheduled so far (including the current slot) for the current HARQ codebook. The total DAI in a slot are thus set to the highest counter DAI of the slot. To save overhead, a modulo operation (often mod 2) is often applied to counter and total DAI which can then be expressed with a few bits, e.g. 2 bit for mod-2. The counter/total DAI mechanism enables the receiver to recover the HARQ codebook size as well as indexing into the HARQ codebook if few contiguous DL assignments are missed. FIGURE 1 illustrates an example of counter and total DAI. For simplicity, no modulo operation has been applied in the illustration.

PUCCH can carry ACK/NACK (feedback related to HARQ), UCI, SR, or beam related information.

NR defines a variety of different PUCCH formats. On a high level, the available PUCCH formats can be grouped into short and long PUCCH formats.

Short PUCCH comes in flavors for $\leq 2$ bit and >2 bit, respectively. Short PUCCH can be configured at any symbols within a slot. While for slot-based transmissions short PUCCH towards the end of a slot interval is the typical configuration, PUCCH resources distributed over or early within a slot interval can be used for scheduling request or PUCCH signaling in response to mini-slots.

PUCCH for $\leq 2$ bit uses sequence selection. In sequence selection, the input bit(s) selects one of the available sequences and the input information is presented by the selected sequence. For example, for 1 bit, two sequences are required. As another example, for 2 bit, four sequences are required. This PUCCH can either span one or two symbols. In case of two symbols, the same information is transmitted in a second symbol, potentially with another set of sequences (sequence hopping to randomize interference) and at another frequency (to achieve frequency-diversity).

PUCCH for >2 bit uses one or two symbols. In case of one symbol, DM-RS and UCI payload carrying subcarriers are interleaved. The UCI payload is prior mapping to subcarriers encoded (either using Reed Muller codes or Polar codes, depending on the payload). In case of two symbols, the encoded UCI payload is mapped to both symbols. For the 2-symbol PUCCH, typically the code rate is halved (in two symbols twice as many coded bits are available) and the second symbol is transmitted at a different frequency (to achieve frequency-diversity).

The long PUCCH also comes in the two flavors for $\leq 2$ bit and for > 2bit. Both variants exist with variable length ranging from 4 to 14 and can even be aggregated across multiple slots. Long PUCCH can occur at multiple positions within a slot with more or less possible placements depending on the PUCCH length. Long PUCCH can be configured with or without frequency-hopping while the latter has the advantage of frequency-diversity.

Long PUCCH for $\leq 2$ bit is similar to PUCCH format 1a/1b in LTE with the exception that DM-RS are placed differently and the variable-length property.

Long PUCCH for >2 bit uses TDM between DM-RS and UCI-carrying symbols. UCI payload is encoded (either using Reed Muller codes or Polar codes, depending on the payload), mapped to modulation symbols (typically QPSK or pi/2 BPSK), DFT-precoded to reduce PAPR, and mapped to allocated subcarriers for OFDM transmission.

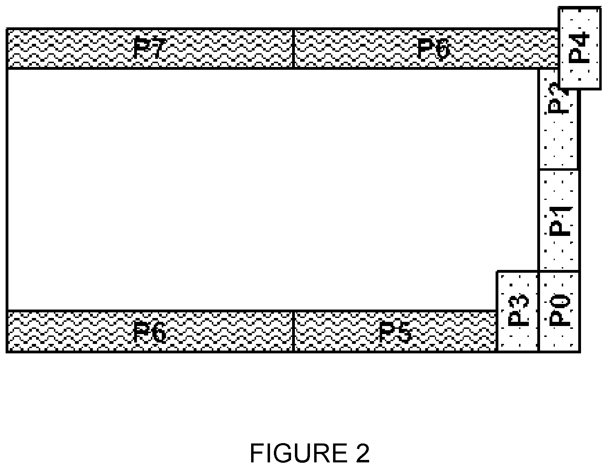

A UE can be configured with multiple PUCCH formats, of the same or different type. Small payload PUCCH formats are needed if a UE is scheduled only with one or two DL assignments while a large payload format is needed if the UE is scheduled with multiple DL assignments. Long PUCCH formats are also needed for better coverage. A UE could for example be configured with a short PUCCH for $\leq 2$ bit and a long PUCCH for >2 bit. A UE in very good coverage could even use a short PUCCH format for >2 bit while a UE in less good coverage requires even for $\leq 2$ bit a long PUCCH format. FIGURE 2 illustrates an example of PUCCH formats configured to a UE. Specifically, FIGURE 2 depicts a UE being configured with multiple long and short PUCCH formats.

NR supports dynamic indication of PUCCH resource and time. As said above, the HARQ codebook carried by PUCCH can contain HARQ feedback from multiple PDSCH (from multiple time instances and/or component carriers). PUCCH resource and time will be indicated in the scheduling DL assignment in case of a dynamic scheduled transmission. The association between PDSCH and PUCCH can be based on the PUCCH resource (PR) and time indicated in the scheduling DCI ($\Delta T$); HARQ feedback of all PDSCHs which scheduling DCIs indicate same PUCCH resource and time are reported together in the same HARQ codebook. The latest PDSCH that can be included is limited by the processing time the UE needs to prepare HARQ feedback.

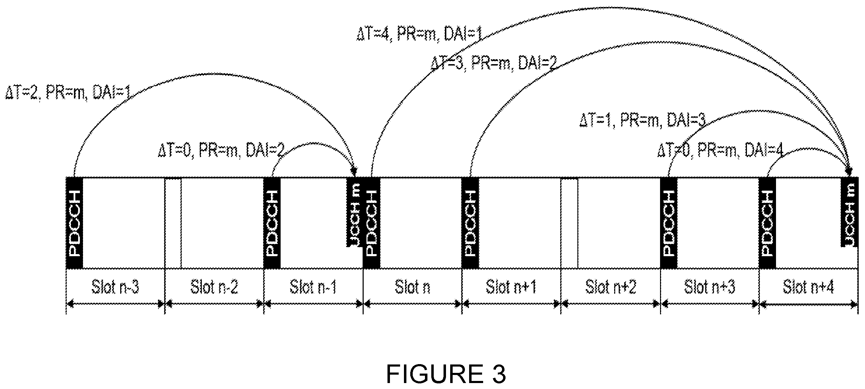

FIGURE 3 illustrates an example HARQ feedback association without carrier aggregation. In the example in FIGURE 3, the UE can report HARQ feedback on a short PUCCH in the same slot. The earliest PDSCH to include in the HARQ codebook for a given PUCCH resource is the first scheduled PDSCH after the time window of the last transmitted same PUCCH resource has been expired. For example, in FIGURE 3, PDSCH of slot *n-1* is reported on PUCCH resource *m* of slot n-1; PDSCH from slot *n* is therefore the first PDSCH to include in the HARQ codebook transmitted on PUCCH resource *m* in slot *n+4*).

To avoid wrong HARQ codebook sizes and wrong indexing into the HARQ codebook, a DAI is included in each DL assignment that counts DL assignments up to (including) the current DL assignment. In case of carrier aggregation, a counter and total DAI are needed as discussed above.

In LTE and NR, a transport block is segmented into multiple code blocks if the transport block exceeds a certain size. For error detection, each code block, as well as the transport block, have its own CRC. In LTE, the HARQ feedback is based on the decoding status of the transport block, such as, for example, a single HARQ feedback bit being generated per transport block.

NR supports this operation mode. In addition, NR also supports CBG HARQ feedback. Here, one or multiple code blocks are grouped into a CBG and one HARQ feedback bit is generated for each CBG. This is useful since only a fraction of the transport blocks needs to be retransmitted if only one or few CBG are in error.

However, there currently exist certain challenge(s). For example, in NR, the behavior for how to handle a Semi-Persistent Scheduling (SPS) release when the UE is configured with CBG based feedback and in addition is configured

**EP 3 753 162 B1**

with dynamic HARQ-ACK codebook (or may also be known as type 2 code book in 38.213 9.3) is undefined. 3GPP contribution R1-1800128 with the title "Clarification on Type-2 HARQ-ACK codebook determination in TS 38.213" from FUJITSU discloses HARQ-ACK codebook determination.

SUMMARY

The invention is carried out in accordance with the appended claims.
Other advantages may be readily apparent to one having skill in the art. Certain embodiments may have none, some, or all of the recited advantages.

BRIEF DESCRIPTION OF THE DRAWINGS

For a more complete understanding of the disclosed embodiments and their features and advantages, reference is now made to the following description, taken in conjunction with the accompanying drawings, in which:

FIGURE 1 illustrates an example of counter and total DAI;
FIGURE 2 illustrates an example of PUCCH formats configured to a UE;
FIGURE 3 illustrates an example HARQ feedback association without carrier aggregation;
FIGURE 4 illustrates an example wireless network in which the subject matter may be implemented, according to certain embodiments;
FIGURE 5 illustrate an example network node, according to certain embodiments;
FIGURE 6 illustrates an example wireless device, according to certain embodiments;
FIGURE 7 illustrates an example user equipment, according to certain embodiments;
FIGURE 8 illustrates a virtualization environment in which functions implemented by some embodiments may be virtualized, according to certain embodiments;
FIGURE 9 illustrates a telecommunication network connected via an intermediate network to a host computer, according to certain embodiments;
FIGURE 10 illustrates a generalized block diagram of a host computer communicating via a base station with a user equipment over a partially wireless connection, according to certain embodiments;
FIGURE 11 illustrates a method implemented in a communication system, according to one embodiment;
FIGURE 12 illustrates another method implemented in a communication system, according to one embodiment;
FIGURE 13 illustrates another method implemented in a communication system, according to one embodiment;
FIGURE 14 illustrates another method implemented in a communication system, according to one embodiment;
FIGURE 15 illustrates a method for generating HARQ-ACK bits associated with SPS release by a system, according to certain embodiments;
FIGURE 16 illustrates another method by a wireless device for generating HARQ-ACK bits or other bits associated with SPS release by a system, according to certain embodiments;
FIGURE 17 illustrates a schematic block diagram of an apparatus in a wireless network, according to certain embodiments;
FIGURE 18 illustrates a method by a network node for receiving HARQ-ACK bits associated with SPS release, according to certain embodiments;
FIGURE 19 illustrates a schematic block diagram of an apparatus in a wireless network, according to certain embodiments; and
FIGURE 20 illustrates a semi-statically configured HARQ codebook, according to certain embodiments.

DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.
Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Other objectives, features and advantages of the enclosed embodiments will be apparent from the following description.

4

The embodiments described herein relate to Hybrid Access Repeat Request-Acknowledgment (HARQ-ACK) feedback for physical downlink shared channel (PDSCH) and downlink (DL) Semi-Persistent Scheduling (SPS) release. Though certain embodiments disclosed herein are described in the context of the generation of HARQ bit(s) to acknowledge SPS release, it is generally recognized that, strictly speaking, the bit acknowledging SPS release is not a HARQ bit since it does not acknowledge a PDSCH reception and instead acknowledges a PDCCH reception. Nevertheless, in the following description, a PDCCH acknowledgment bit is also denoted as an HARQ bit.

The corresponding feedback is sent on the uplink (UL) wherein a user equipment (UE) generates two sub-codebooks if it is configured with CBG based feedback.

According to certain embodiments, which may be referred to herein as Solution 1, a UE may place the HARQ-ACK(s) associated with SPS release within the CBG-based sub-codebook if the SPS release is associated with a cell that has CBG feedback configured for it. In the sub-codebook, the UE may generate a bitmap of size N. According to a particular embodiment, and in the simplest case, this bitmap may contain N number of similar bits associated with the status of the SPS release. However, in another embodiment, it may consist of two different bit patterns of length N, each pattern associated with one status of the SPS release. Here, N gives the configured maximum number of CB in a CBGs, across all CBG cells, i.e. $N = max\_acrocss\_CBG\_cells(N\_c)$ with $N\_c$ the configured maximum number of CB per CBG for cell c. In addition, the UE may potentially generate N' bits, if any of the CBG cells is configured to support more than 4 layer MIMO, and $N' = max\_acrocss\_CBG\_cells(N\_c*L\_c)$, with $N\_c$ as above and $L\_c = 1$ (cell c configuration for MIMO with up to four layers) and $Lc = 2$ (cell c configuration for MIMO with more than four layers)

According to certain embodiments, the UE may place the feedback within the codebook in a similar manner as if the PDCCH indicating SPS release would have been an PDSCH instead. The DAI (Downlink Assignment Indicator) values contained in the PDCCH are associated with the CBG codebook.

According to certain other embodiments, which may be herein referred to as Solution 2, the UE may place the HARQ-ACK bit(s) associated with SPS release within the TB based sub-codebook. In a particular embodiment, this method may be used if the SPS release is associated with a cell that has CBG feedback configured for it. In a particular embodiment, for example, the UE may generate 1 or 2 HARQ-ACK bits per SPS release. For example, the UE may generate two HARQ-ACK bits if the UE is configured with more than 4 layers on at least one of the TB-based HARQ feedback cells that is being aggregated, otherwise 1 bit. The Downlink Assignment Indicator (DAI) values contained in the PDCCH may be associated with the TB-based HARQ codebook.

For completeness, if the SPS release is associated with a cell that does not have CBG based feedback configured, the HARQ-ACK bits may also be placed within the TB based sub-codebook.

According to still other embodiments, which may be herein referred to as Solution 3, a configured/pre-defined value of bits may be added to the HARQ codebook. PDCCH indicating SPS release may include the SPS release status in these reserved bit(s). In a particular embodiment, a mapping rule may be needed if there can be more SPS release than reserved bits. This mapping rule may also contain bundling, i.e. multiple/all SPS release status bits are bundled together, e.g. logical AND combined. Alternatively, the number of PDCCH indicating SPS release may be limited to the size of the bitfield.

In a particular embodiment, these bits may be placed at the beginning of the overall codebook, between sub-codebook 1 and 2, or after sub-codebook 2. In this case, the UE may ignore any DAI values associated with an PDCCH indicating SPS release. Alternatively, if the bitfield does not have a configured/pre-defined length but according to detected PDCCH(s) indicating SPS release, the SPS release bits could form a third sub-codebook and the DAI field(s) in the PDCCH would be associated with this third sub-codebook.

According to a particular embodiment, the configured/pre-defined bits is in one sub embodiment only present in the codebook if SPS is RRC configured on a at least one of the aggregated cells/BWPs and with CBG configured. The bits could be there for a BWP that is inactivated but is part of an aggregated cell and with CBG configured.

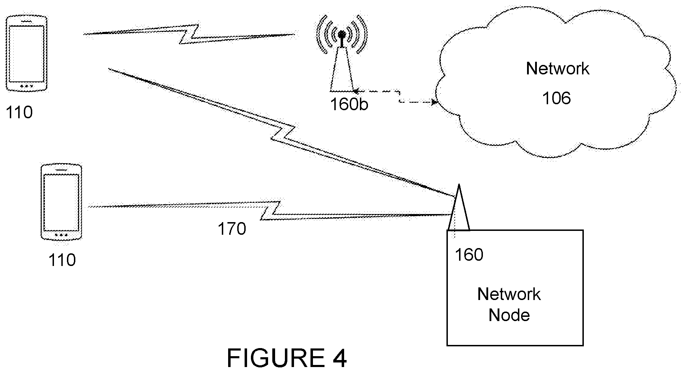

Although the subject matter described herein may be implemented in any appropriate type of system using any suitable components, FIGURE 4 illustrates an example wireless network in which the subject matter may be implemented, according to certain embodiments. For simplicity, the wireless network of FIGURE 4 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

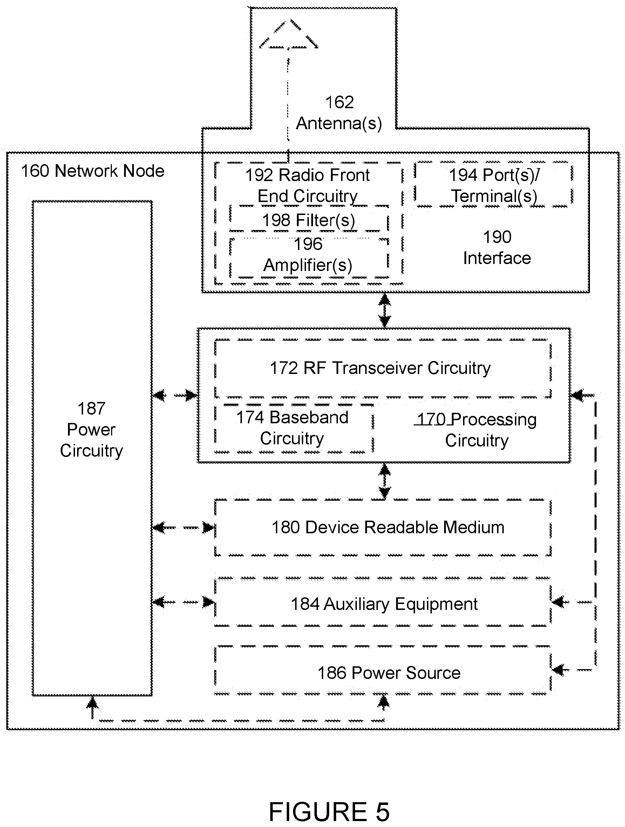

FIGURE 5 illustrates an example network node 160, according to certain embodiments. As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 5, network node 160 includes processing circuitry 170, device readable medium 180, interface 190, auxiliary equipment 184, power source 186, power circuitry 187, and antenna 162. Although network node 160 illustrated in the example wireless network of FIGURE 5 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signalling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 5 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

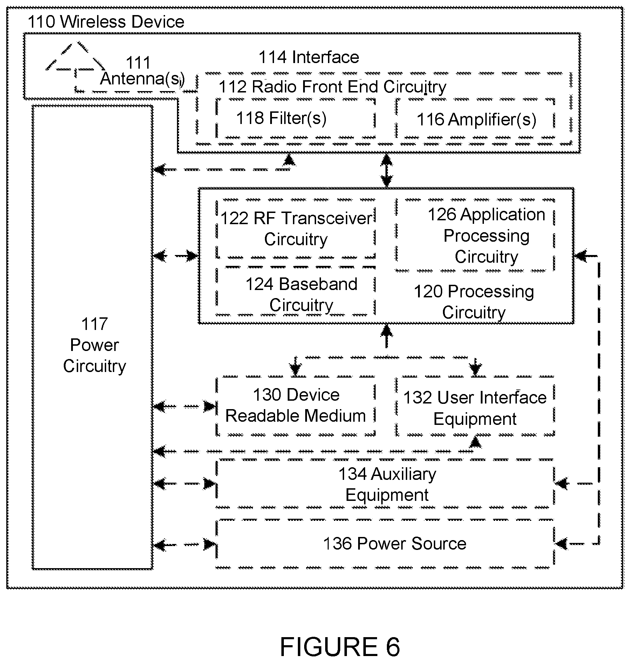

FIGURE 6 illustrates an example wireless device (WD), according to certain embodiments. As used herein, WD refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120, and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110, and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network, and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

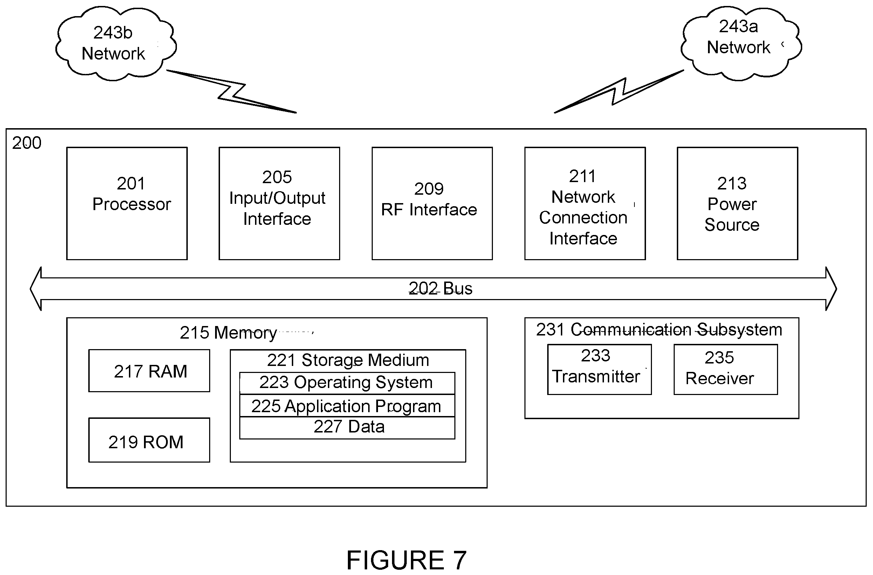

FIGURE 7 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 2200 may be any UE identified by the 3$^d$ Generation Partnership Project (3GPP), including a NB-IoT UE, a machine type communication (MTC) UE, and/or an enhanced MTC (eMTC) UE. UE 200, as illustrated in FIGURE 7, is one example of a WD configured for communication in accordance with one or more communication standards promulgated by the 3$^{rd}$ Generation Partnership Project (3GPP), such as 3GPP's GSM, UMTS, LTE, and/or 5G standards. As mentioned previously, the term WD and UE may be used interchangeable. Accordingly, although FIGURE 7 is a UE, the components discussed herein are equally applicable to a WD, and vice-versa.

In FIGURE 7, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in FIGURE 7, or only a subset of the components. The level of integration between the components may vary from one UE to another UE. Further, certain UEs may contain multiple instances of a component, such as multiple processors, memories, transceivers, transmitters, receivers, etc.

In FIGURE 7, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 7, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 7, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

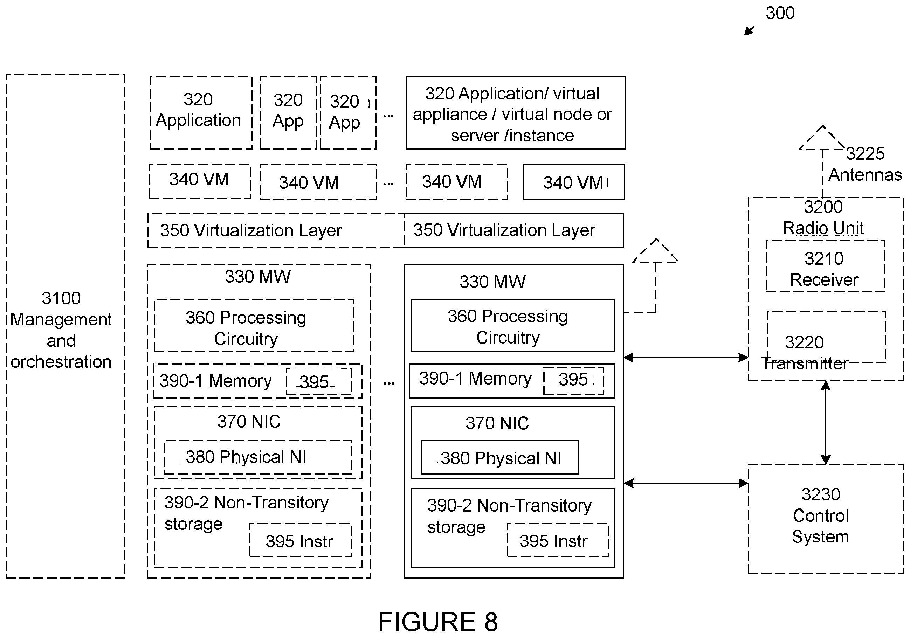

FIGURE 8 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 8, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 8.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signalling can be effected with the use of control system 3230 which may alternatively be used for communication between the hardware nodes 330 and radio units 3200.

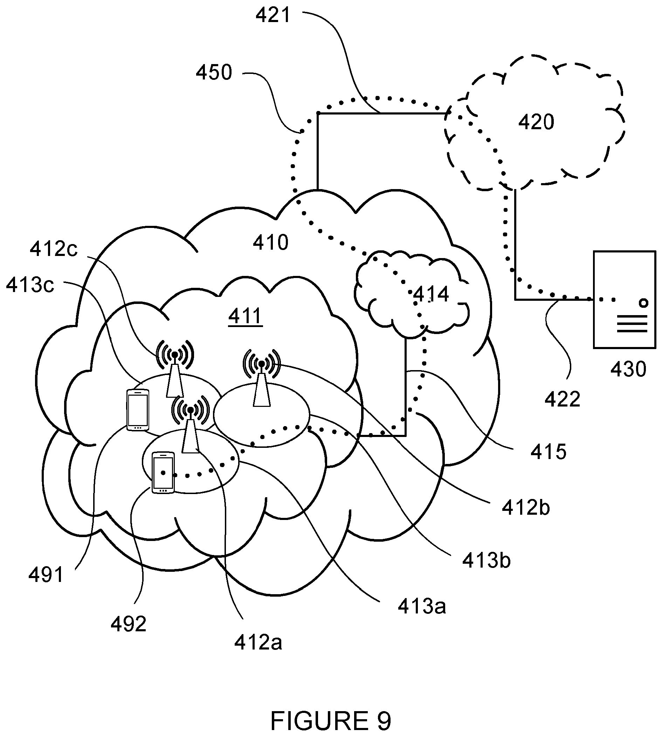

FIGIURE 9 illustrates an example telecommunication network connected via an intermediate network to a host computer, according to certain embodiments. With reference to FIGURE 9, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 9 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

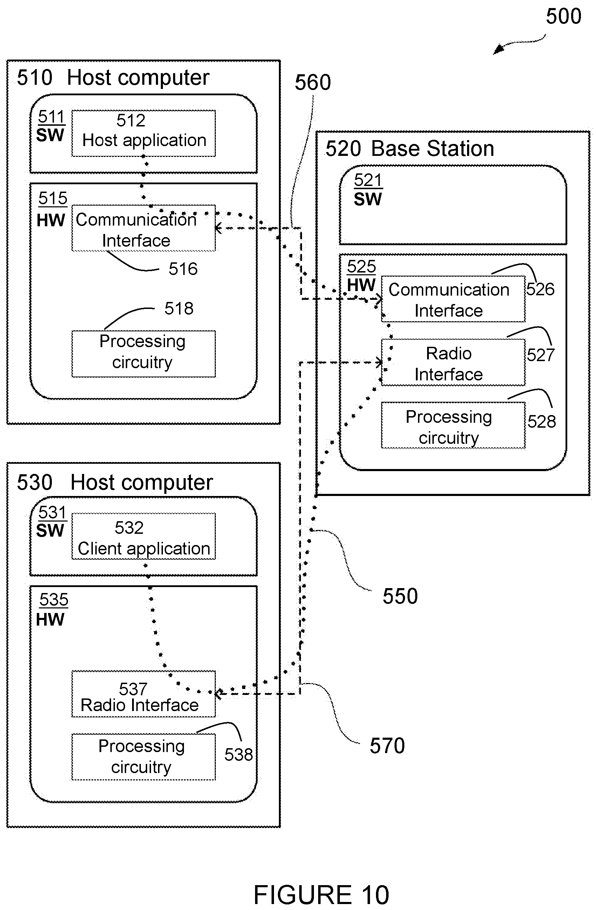

FIGURE 10 illustrates a host computer communicating via a base station with a user equipment over a partially wireless connection, in accordance with some embodiments. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in Figure 5) served by base station 520. Communication interface 526 may be configured to facilitate connection 560 to host computer 510. Connection 560 may be direct or it may pass through a core network (not shown in Figure 5) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in Figure 5 may be similar or identical to host computer 430, one of base stations 412a, 412b, 412c and one of UEs 491, 492 of FIGURE 9, respectively. This is to say, the inner workings of these entities may be as shown in FIGURE 9 and independently, the surrounding network topology may be that of FIGURE 9.

In FIGURE 9, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may ensure adequate signal quality and thereby provide benefits such as reduced user waiting time and better responsiveness.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

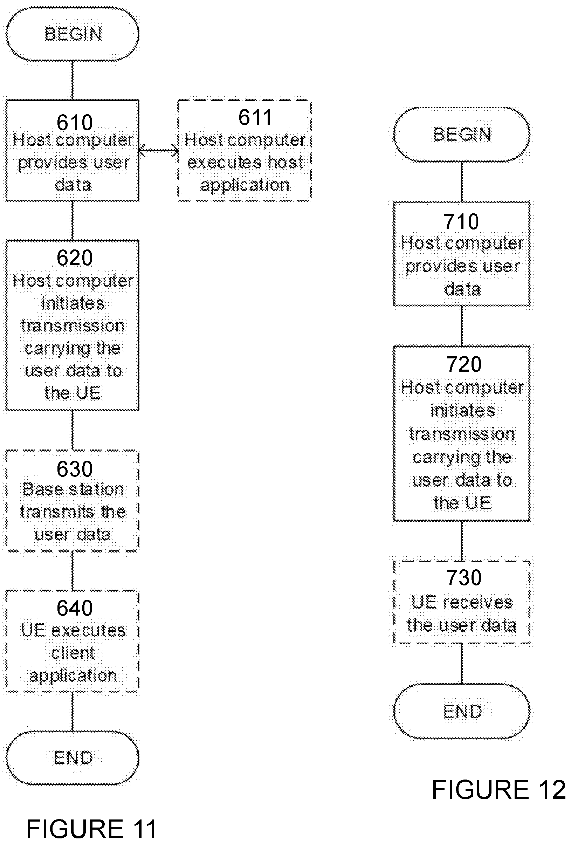

FIGURE 11 is a flowchart illustrating a method implemented in a communication system, in accordance with one embodiment. The communication system includes a host computer, a base station and a UE which may be those described with reference to FIGURES 9 and 10. For simplicity of the present disclosure, only drawing references to FIGURE 11 will be included in this section. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 12 is a flowchart illustrating a method implemented in a communication system, in accordance with one embodiment. The communication system includes a host computer, a base station and a UE which may be those described with reference to FIGURES 9 and 10. For simplicity of the present disclosure, only drawing references to FIGURE 12 will be included in this section. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

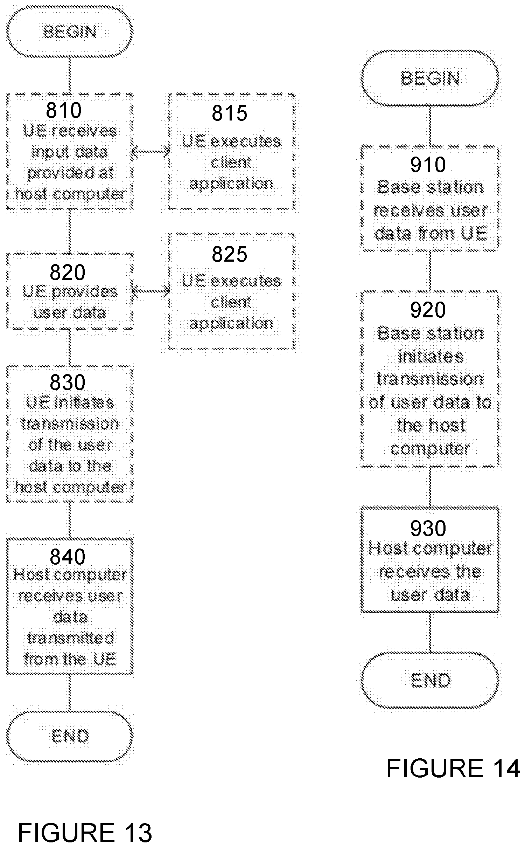

FIGURE 13 is a flowchart illustrating a method implemented in a communication system, in accordance with one embodiment. The communication system includes a host computer, a base station and a UE which may be those described with reference to FIGURES 9 and 10. For simplicity of the present disclosure, only drawing references to FIGURE 13 will be included in this section. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 14 is a flowchart illustrating a method implemented in a communication system, in accordance with one embodiment. The communication system includes a host computer, a base station and a UE which may be those described with reference to FIGURES 9 and 10. For simplicity of the present disclosure, only drawing references to FIGURE 14 will be included in this section. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

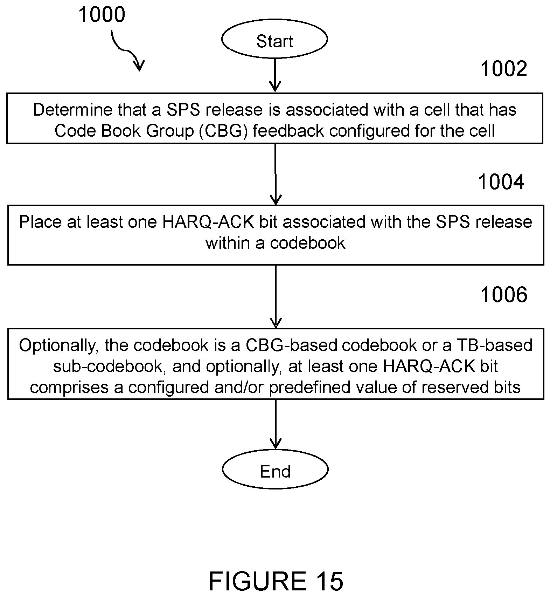

FIGURE 15 depicts a method for generating HARQ-ACK bits associated with SPS release by a system, according to certain embodiments. According to certain embodiments, the system may be a virtualized system. In accordance with particular embodiments, the method begins at step 1002 with determining that a SPS release is associated with a cell that has CBG feedback configured for the cell. The method proceeds to step 1004 with placing at least one HARQ-ACK bit associated with the SPS release within a codebook. In a particular embodiment, the codebook is a CBG-based codebook or a TB-based sub-codebook. In a particular embodiment, the at least one HARQ-ACK bit comprises a configured and/or pre-defined value of reserved bits.

According to certain embodiments, steps 1002, 1004, and 1006 may be repeatedly performed to generate HARQ-ACK bits associated with SPS release.

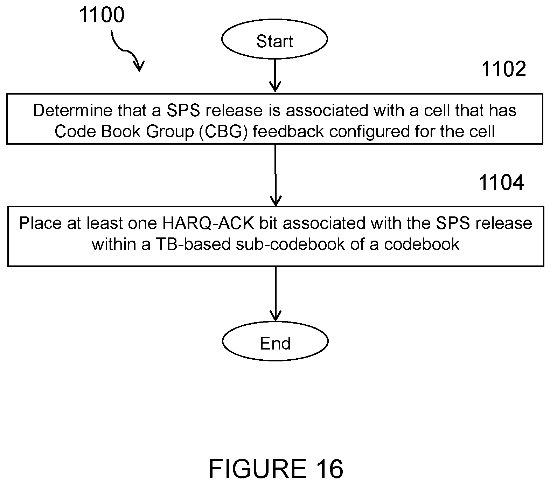

FIGURE 16 depicts another method by a wireless device for generating HARQ-ACK bits or other bits associated with SPS release by a system, according to certain embodiments. At step 1102, the wireless device determines that a SPS release is associated with a cell that has CBG feedback configured for the cell. At step 1104, at least one HARQ-ACK bit associated with the SPS release is placed within a transport block-based sub-codebook of a codebook.

In a particular embodiment, the codebook further comprises a CBG-based sub-codebook of the codebook.

In a particular embodiment, the method may further include the wireless device generating at least one HARQ-ACK bit per SPS release.

In a particular embodiment, when determining that the SPS release is associated with the cell that has CBG feedback configured for the cell, the wireless device may receive, from a network node, a first message configuring the wireless device for CBG feedback for the cell. The wireless device may also receive, from the network node, a second message that indicates that the SPS release is associated with the cell.

In a particular embodiment, the method further includes the wireless device receiving a DAI from a network node, and the DAI is updated based on the SPS release.

In a particular embodiment, the method may further include the wireless device associating at least one DAI value contained in a PDCCH with the TB-based HARQ sub-codebook of the codebook, where the PDCCH is the same PDCCH that carries the SPS release.

In a particular embodiment, the at least one HARQ-ACK bit comprises a configured and/or pre-defined value of reserved bits.

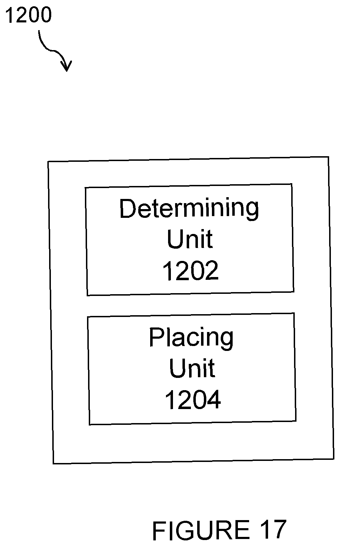

FIGURE 17 illustrates a schematic block diagram of an apparatus 1200 in a wireless network (for example, the wireless network shown in FIGURE 4). The apparatus may be implemented in a wireless device or network node (e.g., wireless device 110 or network node 160 shown in FIGURE 4). Apparatus 1200 is operable to carry out the example method described with reference to FIGURE 15 and/or FIGURE 16 and possibly any other processes or methods disclosed herein. It is also to be understood that the methods of FIGURE 15 and 16 are not necessarily carried out solely by apparatus 1200. At least some operations of the method can be performed by one or more other entities.

Virtual Apparatus 1200 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause Determining Unit 1202, Placing Unit 1204, and any other suitable units of apparatus 1200 to perform corresponding functions according one or more embodiments of the present disclosure.

As illustrated in FIGURE 17, apparatus 1200 includes Determining Unit 1202 and Placing Unit 1204. In a particular embodiment, for example, Determining Unit 1202 may determine that a SPS release is associated with a cell that has CBG feedback configured for the cell and Placing Unit 1204 may place at least one HARQ-ACK bit associated with the SPS release within a codebook. As another example, in a particular embodiment, Determining Unit 1202 may determine that a SPS release is associated with a cell that has CBG feedback configured for the cell and Placing Unit 1204 may place at least one HARQ-ACK bit associated with the SPS release within a transport block-based sub-codebook of a codebook.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

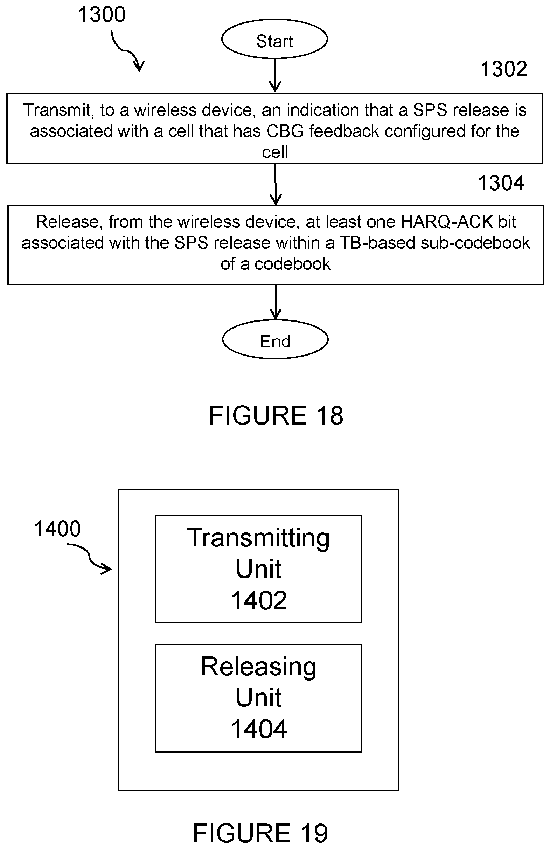

FIGURE 18 depicts a method by a network node for receiving HARQ-ACK bits associated with SPS release. The method begins at step 1302 when the network node transmits, to a wireless device, an indication, that a SPS release is associated with a cell that has CBG feedback configured for the cell. At step 1304, the network node receives, from the wireless device, at least one HARQ-ACK bit associated with the SPS release within a TB-based sub-codebook of a codebook.

In a particular embodiment, the codebook further comprises a CBG-based sub-codebook of the codebook.

In a particular embodiment, the at least one HARQ-ACK bit is per SPS release.

In a particular embodiment, the method may further include the network node transmitting, together with the indication of the SPS release, DAI to a wireless device. The DAI is updated based on the SPS release.

In a particular embodiment, the method may further include the network node associating at least one DAI value contained in a PDCCH with the TB-based HARQ sub-codebook of the codebook.

In a particular embodiment, the at least one HARQ-ACK bit comprises a configured and/or pre-defined value of reserved bits.

FIGURE 19 illustrates a schematic block diagram of an apparatus 1400 in a wireless network (for example, the wireless network shown in FIGURE 4). The apparatus may be implemented in a wireless device or network node (e.g., wireless device 110 or network node 160 shown in FIGURE 4). Apparatus 1400 is operable to carry out the example method described with reference to FIGURE 18 and possibly any other processes or methods disclosed herein. It is also to be understood that the method of FIGURE 18 is not necessarily carried out solely by apparatus 1400. At least some operations of the method can be performed by one or more other entities.

Virtual Apparatus 1400 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause Transmitting Unit 1402, Releasing Unit 1404, and any other suitable units of apparatus 1400 to perform corresponding functions according one or more embodiments of the present disclosure.

As illustrated in FIGURE 19, apparatus 1400 includes Transmitting Unit 1402 and Releasing Unit 1404. In a particular embodiment, for example, Transmitting Unit 1402 may transmit, to a wireless device, an indication, that a SPS release is associated with a cell that has CBG feedback configured for the cell and Receiving Unit 1404 may receive, from the wireless device, at least one HARQ-ACK bit associated with the SPS release within a TB-based sub-codebook of a codebook

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

EXAMPLE EMBODIMENTS

Embodiment 1. A method by a wireless device for generating Hybrid Automatic Repeat ReQuest-Acknowledgement (HARQ-ACK) bits associated with Semi-Persistent Scheduling (SPS) release, the method comprising:

determining that a SPS release is associated with a cell that has Code Book Group (CBG) feedback configured for the cell; and
placing at least one HARQ-ACK bit associated with the SPS release within a codebook.

Embodiment 2. The method of embodiment 1, wherein the codebook comprises a CBG-based codebook.

Embodiment 3. The method of any of embodiments 1 to 2, further comprising generating a bitmap of size N.

Embodiment 4. The method of any one of embodiments 1 to 3, wherein the bitmap comprises N number of similar bits associated with a status of the SPS release.

Embodiment 5. The method of any one of embodiments 1 to 3, wherein the bitmap comprises two different bit patterns of length N, each of the two patterns being associated with one status of the SPS release.

Embodiment 6. The method of embodiment 5, wherein N gives a configured maximum number of code blocks (CB) in a CBG across all CBG cells.

Embodiment 7. The method of any one of embodiments 1 to 6, wherein at least one CBG cell is configured to support more than 4 layer Multiple Input Multiple Output (MIMO), and the method further comprises generating N' bits where N' = max_acrocss_CBG_cells (N_c*L_c), with N_c as above and L_c = 1 (cell c configuration for MIMO with up to four layers) and Lc = 2 (cell c configuration for MIMO with more than four layers).

Embodiment 8. The method of any one of embodiments 1 to 7, wherein at least one Downlink Assignment Indicator (DAI) value contained in the physical downlink control channel (PDCCH) are associated with the CBG codebook.

Embodiment 9. The method of embodiment 1, wherein the codebook comprises a TB-based sub-codebook.

Embodiment 10. The method of any one of embodiments 1 and 9, further comprising generating at least one HARQ-ACK bit per SPS release.

Embodiment 11. The method any one of embodiments 1 and 9 to 10, further comprising:

if the wireless device is configured with more than 4 layers on at least one of the TB-based HARQ feedback cells that is being aggregated, generating two HARQ-ACK bits, and
otherwise, generating one HARQ-ACK bit.

Embodiment 12. The method of any one of embodiments 1 and 9 to 11, further comprising associating the Downlink Assignment Indicator (DAI) values contained in the physical downlink control channel (PDCCH) with the TB-based HARQ codebook

Embodiment 13. The method of embodiment 1, wherein the at least one HARQ-ACK bit comprises a configured and/or pre-defined value of reserved bits.

Embodiment 14. The method of any one of embodiments 1 and 13, wherein a physical downlink control channel (PDCCH) indicating the SPS release comprises a SPS release status in the reserved bits.

Embodiment 15. The method of any one of embodiments 1 and 13 to 14, further comprising obtaining a mapping rule where there is more SPS release than the reserved bits.

Embodiment 16. The method of embodiment 15, wherein the mapping rule identifies that multiple SPS release status bits are bundled together.

Embodiment 17. The method of embodiment 15, wherein the mapping rule indicates that a number of PDCCH indicating SPS release may be limited to a size of a bitfield.

Embodiment 18. The method of any one of embodiments 1 to 17, further comprising dropping channel state information (CSI) to avoid lost physical uplink shared channel (PUSCH) caused by at least one missed downlink (DL) detection.

Embodiment 19. A computer program comprising instructions which when executed on a computer perform any of the methods of embodiments 1 to 18.

Embodiment 20. A computer program product comprising computer program, the computer program comprising instructions which when executed on a computer perform any of the methods of embodiments 1 to 18.

Embodiment 21. A non-transitory computer readable medium storing instructions which when executed by a computer perform any of the methods of embodiments 1 to 18.

Embodiment 22. An wireless device for generating Hybrid Automatic Repeat ReQuest-Acknowledgement (HARQ-ACK) bits associated with Semi-Persistent Scheduling (SPS) release, the wireless device comprising: processing circuitry configured to:

> determine that a SPS release is associated with a cell that has Code Book Group (CBG) feedback configured for the cell; and
> place at least one HARQ-ACK bit associated with the SPS release within a codebook.

Embodiment 23. The wireless device of embodiment 22, wherein the codebook comprises a CBG-based codebook.

Embodiment 24. The wireless device of any of embodiments 22 to 23, wherein the processing circuitry is further configured to generate a bitmap of size N.

Embodiment 25. The wireless device of any one of embodiments 22 to 24, wherein the bitmap comprises N number of similar bits associated with a status of the SPS release.

Embodiment 26. The wireless device of any one of embodiments 22 to 24, wherein the bitmap comprises two different bit patterns of length N, each of the two patterns being associated with one status of the SPS release.

Embodiment 27. The wireless device of embodiment 26, wherein N gives a configured maximum number of code blocks (CB) in a CBG across all CBG cells.

Embodiment 28. The wireless device of any one of embodiments 22 to 27, wherein at least one CBG cell is configured to support more than 4 layer Multiple Input Multiple Output (MIMO), and the method further comprises generating N' bits where $N' = max\_acrocss\_CBG\_cells (N\_c*L\_c)$, with N_c as above and L_c = 1 (cell c configuration for MIMO with up to four layers) and Lc = 2 (cell c configuration for MIMO with more than four layers).

Embodiment 29. The wireless device of any one of embodiments 22 to 28, wherein at least one Downlink Assignment Indicator (DAI) value contained in the physical downlink control channel (PDCCH) are associated with the CBG codebook. Embodiment 30. The wireless device of embodiment 29, wherein the codebook comprises a TB-based sub-codebook.

Embodiment 31. The wireless device of any one of embodiments 22 and 30, wherein the processing circuitry is further configured to generate at least one HARQ-ACK bit per SPS release.

Embodiment 32. The wireless device any one of embodiments 22 and 30 to 31, wherein the processing circuitry is further configured to:

if the wireless device is configured with more than 4 layers on at least one of the TB-based HARQ feedback cells that is being aggregated, generate two HARQ-ACK bits, and
otherwise, generate one HARQ-ACK bit.

Embodiment 33. The wireless device of any one of embodiments 22 and 30 to 32, wherein the processing circuitry is configured to associate the Downlink Assignment Indicator (DAI) values contained in the physical downlink control channel (PDCCH) with the TB-based HARQ codebook.

Embodiment 34. The wireless device of embodiment 22, wherein the at least one HARQ-ACK bit comprises a configured and/or pre-defined value of reserved bits.

Embodiment 35. The wireless device of any one of embodiments 22 and 34, wherein a physical downlink control channel (PDCCH) indicating the SPS release comprises a SPS release status in the reserved bits.

Embodiment 36. The wireless device of any one of embodiments 22 and 34 to 35, wherein the processing circuitry is configured to obtain a mapping rule where there is more SPS release than the reserved bits.

Embodiment 37. The wireless device of embodiment 36, wherein the mapping rule identifies that multiple SPS release status bits are bundled together.

Embodiment 38. The wireless device of embodiment 36, wherein the mapping rule indicates that a number of PDCCH indicating SPS release may be limited to a size of a bitfield.

Embodiment 39. The wireless device of any one of embodiments 22 to 38, wherein the processing circuitry is further configured to drop channel state information (CSI) to avoid lost physical uplink shared channel (PUSCH) caused by at least one missed downlink (DL) detection.

ADDITIONAL INFORMATION

In the following, the remaining aspects for carrier aggregation to include support of CA with up to 2 different numerologies are discussed.
Furthermore, the HARQ codebook construction as currently described in Subclause 9 analyzed.
When introducing support for CA with different numerologies a few aspects needs to be clarified.
The first aspect to clarify is the timing parameter k in section 9.2.3 of 38.213, 15.0.0 (2018-02). It should be expressed in the numerology of the serving cell in which the PUCCH is located. Currently the text is ambiguous. One can note that if the numerology is the same on all serving cells this will not matter as the result will be the same. Below is a text proposal capturing this aspect.
**Proposal 1-1:** k in section 9.2.3 in 38.213 should be expressed in the numerology of the serving cell on which the PUCCH is transmitted on.
For cross carrier scheduling there are some specific issues arising from the fact that it is possible to aggregate carriers of different numerologies. For example, if a carrier with a lower numerology cross-carrier schedules a carrier of a higher numerology, the PDCCH load on the carrier of the lower numerology can potentially be very high as it would need to cover multiple high-numerology slots in a single slot. This topic was partly discussed at a WG meeting preceding the RAN plenary where the down-scoping leading to limit CA to same numerology has been agreed. Hence it was not discussed further in any working group meetings how to handle this. To have a pragmatic approach for Rel-15 our proposal would be to exclude this case for Rel-15.
Proposal 1-2: Cross-carrier scheduling from a lower numerology to a higher numerology is not supported in Rel-15.

Text proposal:

-----------------------<Start of Text Proposal>-----------------------

### 9.2.3 UE procedure for reporting HARQ-ACK

A UE may transmit one or more PUCCHs on a serving cell in different symbols within a slot of $N_{\text{symb}}^{\text{slot}}$ symbols as defined in [4, TS 38.211]. With reference to slots for PUCCH transmissions or PUSCH transmissions, if the UE detects a DCI format 1_0 or a DCI format 1_1 that includes a PDSCH-to-HARQ-timing-indicator field [5, TS 38.212] and schedules a PDSCH reception or a SPS PDSCH release over a number of symbols where the last symbol is within slot *n,* the UE shall provide corresponding HARQ-ACK information in a PUCCH transmission or PUSCH transmission within slot *n+k*, where *k* is a number of slots and is indicated by the PDSCH-to-HARQ-timing-indicator field in the DCI format.

For DCI format 1_1, the PDSCH-to-HARQ-timing-indicator field values map to values for a number of slots indicated by higher layer parameter *DL-data-DL-acknowledgement* as defined in Table 9.2.1-1 from a set of number of slots provided by higher layer parameter *Slot-timing-value-K1.*

For DCI format 1_0, the PDSCH-to-HARQ-timing-indicator field values map to {1, 2, 3, 4, 5, 6, 7, 8}. For a PDSCH reception in slot *n* without an associated DCI format 1_0 or DCI format 1_1 detection and for HARQ-ACK transmission in a PUCCH, the UE transmits the PUCCH in slot *n+k* wherein k is given in the numerology of the serving cell that will transmit PUCCH, unless the UE is provided higher layer parameter *UL-DL-configuration-common,* or higher layer parameter *UL-DL-configuration-common-Set2 ,* or higher layer parameter *UL-DL-configuration-dedicated* indicating at least one symbol for the PUCCH transmission in slot *n+k* as a downlink symbol.

If the UE detects a DCI format that does not include a PDSCH-to-HARQ-timing-indicator field and schedules a PDSCH reception over a number of symbols where the last symbol is within slot *n,* the UE shall provide corresponding HARQ-ACK information in a PUCCH transmission within slot *n+k,* wherein *k* is given in the numerology of the serving cell that will transmit PUCCH.

HARQ-ACK transmission in a PUCCH is subject to the limitations for UE transmissions described in Subclause **Error! Reference source not found.** and Subclause **Error! Reference source not found..**

**Table 9.2.1-1: Mapping of PDSCH-to-HARQ_feedback timing indicator field values to numbers of slots**

| PDSCH-to-HARQ_feedback timing indicator | Number of slots *k* |
|---|---|
| '000' | 1st value provided by *DL-data-DL-acknowledgement* |
| '001' | 2nd value provided by *DL-data-DL-acknowledgement* |
| '010' | 3rd value provided by *DL-data-DL-acknowledgement* |
| '011' | 4th value provided by *DL-data-DL-acknowledgement* |
| '100' | 5th value provided by *DL-data-DL-acknowledgement* |
| '101' | 6th value provided by *DL-data-DL-acknowledgement* |
| '110' | 7th value provided by *DL-data-DL-acknowledgement* |
| '111' | 8th value provided by *DL-data-DL-acknowledgement* |

----------------------- <End of Text Proposal>---------------------------------

Section 9 of 3GPP 38.213, V15.0.0 (2018-02) specifies that UCI is transmitted as UCI on PUSCH only in case if PUSCH and PUCCH completely overlap, i.e. share same start and stop symbol. However, PUCCH should not be transmitted as soon as PUSCH and PUCCH overlap in at least one symbol since this leads to a UE output power change which can lead to UE phase changes. Therefore, as soon as PUSCH and PUCCH overlap at least with one symbol, PUCCH should be dropped. In case the dropped PUCCH and PUSCH share the same start symbol, UCI is piggybacked on PUSCH, otherwise UCI is dropped or postponed.

**Proposal 2-1:** As soon as PUSCH and PUCCH overlap with at least one symbol, PUCCH is dropped. If dropped PUCCH and PUSCH share the same starting symbol UCI can be piggy-backed on PUSCH.

An according text proposal for Section 9 in 3GPP 38.213, V15.0.0 (2018-02) is provided in Section 0.

3.2 HARQ feedback for DL assignments scheduled with fallback DCI and CBG

In the last meeting two agreements have been reached how to handle the case if UE is configured with CBG and is scheduled by fallback DCI 1_0:

Agreements:

- When the configured number of CBGs is assumed to N, and in case when N-bit HARQ-ACK is to be transmitted by the UE in response to the PDSCH transmission scheduled by fallback DCI:

  - The TB-level HARQ-ACK is repeated over all the N bits for the configured number of CBGs.

Agreements:

- For semi-static HARQ-ACK codebook, the UE provides CBG-based HARQ-ACK in response to detecting DCI format 1_0 for PDSCH reception on a cell with configuration for CBG-based HARQ-ACK

Considering these two agreements together suggests a UE should report TB-based HARQ feedback (repeated N times) if the PDSCH has been scheduled by the fallback DCI, except if the UE is configured with a semi-statically configured HARQ codebook: In this case the UE should report CBG-based HARQ feedback.

If the UE needs anyway to report a large semi-statically configured HARQ codebook (even if only a single DL assignment has been detected) the link performance gain by replacing N CBG HARQ feedback bits by N identical TB HARQ feedback bits is small. On the other hand, for a dynamic HARQ codebook, if UE detects only a single DL assignment, the link performance gain is large if gNB only needs to detect N identical bits compared to N independent bits. Therefore, we believe above interpretation of above agreements is correct. The current text in Section 9.1 of 3GPP 38.213, V15.0.0 (2018-02) specifies to always repeat the TB-based HARQ feedback N times, irrespective of HARQ codebook type.

**Proposal 2-2:** If UE is scheduled by fallback DCI 1_0 and is configured with a semi-statically configured HARQ codebook, the UE reports HARQ feedback according to its CBG configuration (and not N times the TB-based HARQ feedback).

A text proposal for Section 9.1 in **Error! Reference source not found.** adopting our understanding of above agreements is provided in Section 0.

3.3 MIMO configuration

Section 9.1 in **Error! Reference source not found.** currently mentions several times "value of higher layer parameter *Number-MCS-HARQ-DL-DCI* for serving cell". However, the parameter *Number-MCS-HARQ-DL-DCI* is defined per BWP and not per cell. It is proposed to clarify that *Number-MCS-HARQ-DL-DCI* is configured per BWP rather than per cell.

**Proposal 2-3:** Clarify that parameter *Number-MCS-HARQ-DL-DCI* is configured per BWP and not per cell.

A text proposal for Section 9.1 in 3GPP 38.213, V15.0.0 (2018-02) with this clarification is provided in Section 0.

3.4 CBG-based HARQ feedback

In Section 9.1.3.1 in 3GPP 38.213, V15.0.0 (2018-02) for CBG-based feedback, the TB-based sub-codebook is determined based on $N_{\text{cells}}^{\text{DL}}$ since for fallback DCI TB-based HARQ feedback is generated. However, even though the UE generates TB-based feedback it repeats the feedback N times. Therefore, the HARQ feedback needs to be included in the CBG-based HARQ sub-codebook. If the N bit large feedback would be included in the TB-based HARQ sub-codebook error cases would occur if the UE misses a DL assignment.

The TB-based HARQ sub-codebook should therefore be determined based on $N_{\text{cells}}^{\text{DL,TB}}$, i.e. $N_{\text{cells}}^{\text{DL}}$ should be replaced by $N_{\text{cells}}^{\text{DL,TB}}$. An according text proposal is provided in Section 0.

**Proposal 2-4:** The TB-based HARQ sub-codebook for HARQ feedback with CBG configuration should be determined based on $N_{\text{cells}}^{\text{DL,TB}}$.

3.5 SPS release in HARQ codebook with CBG configuration

The current text in Section 9.1.3.1 of 3GPP 38.213, V15.0.0 (2018-02) does currently not specify how to handle a detected PDCCH indicating SPS release on a cell configured with CBG. The current text specifies to replace TB-based feedback bit by a CBG-based bitmap. However, this does not apply to PDCCH indicating SPS release since there is no transport block.

It is proposed to add for each detected PDCCH indicating SPS release feedback to the *TB-based* HARQ sub-codebook (even though the PDCCH has been detected on a cell configured with CBG). The size of the HARQ feedback is either one or two bits, depending if any of the cells configured with TB-based feedback has configuration *Number-MCS-HARQ-DL-DCI*=2. The DAI(s) included in the PDCCH indicating SPS release is associated with the TB-based HARQ sub-codebook.

Proposal 2-5: Feedback for a PDCCH indicating SPS release detected on a cell with CBG configuration is added to the TB-based HARQ sub-codebook.

3.6 Default HARQ codebook

Prior RRC configuration, which HARQ codebook should the UE use until then? At the last RAN1 meeting this topic has been discussed and it was questioned if UE would need a HARQ codebook until it is RRC configured or if it is sufficient to assume 1 or 2 bit HARQ feedback transmissions.

Before a UE receives a dedicated RRC configuration it can only be scheduled using the fallback DCI and is limited to single layer/single port transmission. Furthermore, does the gNB not have any CSI feedback resulting in conservative scheduling. The initial bandwidth part can also be rather narrow (depending on RMSI COREST configuration). All these facts together can result in low data rates and that the dedicated RRC configuration is transmitted over several slots. In TDD, several PDSCH need to be acknowledges in a single PUCCH. If more than 2 bits need to be transmitted, a HARQ codebook is needed. in TDD DL/UL pattern with 3 or 4 DL slots followed by a single UL slot up to 3 or 4 PDSCH need to be acknowledged requiring a HARQ codebook.

A dynamic HARQ codebook automatically adopts its size to accommodate the required number of HARQ feedback bits. A semi-static HARQ codebook would require appropriate configuration, a default semi-static HARQ codebook might be too small or large, depending e.g. on the TDD DL/UL pattern. The dynamic HARQ codebook seems therefore to be the simpler choice.

**Proposal** 2-6: Prior RRC configuration, the UE assumes a dynamic HARQ codebook.

3.7 Fixed HARQ codebook

The HARQ association set (slots for which HARQ feedback should be reported in a given PUCCH) is currently based on a set of slot timing values $K_1$, on the time-domain resource allocation *pdsch-symbolAllocation,* on a TDD DL/UL pattern, and on a PDCCH configuration.

The dependence of the HARQ association set on the PDCCH configuration complicates the design substantially. Given that the intention with a semi-statically configured HARQ codebook is simplicity and robustness we propose to remove the dependency of the HARQ association set on the PDCCH configuration.

**Proposal** 2-7: HARQ association set does not depend on PDCCH configuration.

The *pdsch-symbolAllocation* table is used to avoid overbooking of the HARQ codebook if PDSCH allocation overlap. This also implies that a reconfiguration of the table implies a differently sized HARQ codebook which is in our view undesirable. Furthermore, the HARQ codebook would reserve 7 bits (assuming *Number-MCS-HARQ-DL-DCI*=1 and no CBG) if *pdsch-symbolAllocation* would configure 7 nonoverlapping Type B PDSCH. Such a Type B configuration could be useful to guarantee low latency, but gNB may not intend to schedule a second PDSCH when it already scheduled a PDSCH in the slot. In this case the HARQ codebook would contain entries of length 7 bitmaps, while a single bit would be sufficient. Furthermore, it is unlikely that all UEs in Rel-15 will support to decode 7 PDSCH within a slot, the HARQ entries per slot needs to be upper-bounded by the UEs ability on PDSCH decoding within a slot.

It is therefore proposed to decouple the semi-statically configured HARQ codebook size from *pdsch-symbolAllocation.*

**Proposal 2-8:** Decouple semi-statically configured HARQ codebook size from *pdsch-symbolAllocation.*

One approach would be to divide the slot into N sub-intervals, with e.g. N=2 one slot would be divided into two sub-intervals, the first sub-interval covering the first half of the slot, the second sub-interval covering the second half of the slot. In the HARQ codebook, 1 bit (or more bits, depending on *Number-MCS-HARQ-DL-DCI* and CBG configuration) would be reserved for each sub-interval.

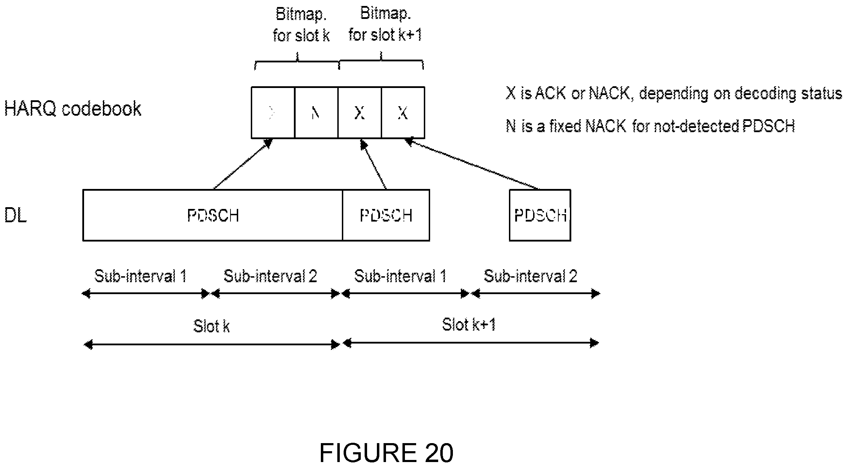

HARQ feedback for a PDSCH starting in a given sub-interval would be inserted at the corresponding bit position of the length-N bitmap, see FIGURE 20. Specifically, FIGURE 20 illustrates a semi-statically configured HARQ codebook.

A slot is divided into two sub-intervals (N=2). HARQ feedback for a PDSCH that starts in the first sub-interval in a slot is mapped to the first bit within the length 2 (N) bitmap associated with the slot. A PDSCH that starts in the second sub-interval is mapped to the second bit.

UE behaviour needs to be defined if multiple PDSCH overlap within a sub-interval. One possibility is that UE reports HARQ feedback for the PDSCH associated with the latest PDCCH among those PDCCH scheduling PDSCH in the current sub-interval. Another possibility would be to clarify a UE is not expected to handle such a situation. It is preferred that UE would report HARQ feedback for the PDSCH associated with the latest received PDCCH.

Currently the semi-statically configured HARQ codebook does not provide for inclusion of SPS PDSCH or feedback for PDCCH indicating SPS release.

HARQ feedback for an SPS PDSCH can be easily included using above framework, SPS PDSCH HARQ feedback is reported in the bit that is associated with the sub-interval when SPS PDSCH starts. For PDCCH indicating SPS release it is proposed to add one extra bit to the HARQ codebook which is used for PDCCH indicating SPS release. One bit limits the number of PDCCH indicating SPS release to one within the duration of the HARQ association set, however, it is believed this is no severe limitation.

**Proposal 2-9:** Add one bit to the semi-statically configured HARQ codebook for PDCCH indicating SPS release. This bit is added in case any of the cells included in the HARQ codebook is configured with SPS.

3.8 Text proposal

**------------------\<Start of Text Proposal\>-------------------------**

- 9 UE procedure for reporting control information If a UE is configured with a SCG, the UE shall apply the procedures described in this subclause for both MCG and SCG.
- When the procedures are applied for MCG, the terms 'secondary cell', 'secondary cells', 'serving cell', 'serving cells' in this clause refer to secondary cell, secondary cells, serving cell, serving cells belonging to the MCG respectively.
- When the procedures are applied for SCG, the terms 'secondary cell', 'secondary cells', 'serving cell', 'serving cells' in this clause refer to secondary cell, secondary cells (not including PSCell), serving cell, serving cells belonging to the SCG respectively. The term 'primary cell' in this clause refers to the PSCell of the SCG.
  If the UE is configured with a PUCCH-SCell, the UE shall apply the procedures described in this clause for both primary PUCCH group and secondary PUCCH group
- When the procedures are applied for the primary PUCCH group, the terms 'secondary cell', 'secondary cells', 'serving cell', 'serving cells' in this clause refer to secondary cell, secondary cells, serving cell, serving cells belonging to the primary PUCCH group respectively.
- When the procedures are applied for secondary PUCCH group, the terms 'secondary cell', 'secondary cells', 'serving cell', 'serving cells' in this clause refer to secondary cell, secondary cells (not including the PUCCH-SCell), serving cell, serving cells belonging to the secondary PUCCH group respectively. The term 'primary cell' in this clause refers to the PUCCH-SCell of the secondary PUCCH group.

If a UE would transmit a PUCCH that has a same first symbol with a PUSCH transmission, the UE multiplexes the UCI in the PUSCH transmission and does not transmit the PUCCH.

If a UE transmits HARQ-ACK or semi-persistent CSI or periodic CSI on a PUSCH and the UE does not transmit aperiodic CSI on a PUSCH, the UE transmits the HARQ-ACK or semi-persistent CSI or periodic CSI on the PUSCH of the serving cell with smallest *ServCellIndex.*

9.1 HARQ-ACK codebook determination

If a UE receives a PDSCH that is scheduled by a PDCCH with DCI format 1_0, the UE generates HARQ-ACK information only for the transport block in the PDSCH.

If a UE receives a PDSCH without receiving a corresponding PDCCH, or if the UE receives a PDCCH indicating a SPS PDSCH release, the UE generates one corresponding HARQ-ACK information bit.

If a UE is not configured with higher layer parameter *CBG-DL = ON,* the UE generates one HARQ-ACK information bit per transport block.

A HARQ-ACK information bit value of 0 represents a negative acknowledgement (NACK) while a HARQ-ACK information bit value of 1 represents a positive acknowledgement (ACK).

9.1.1 CBG-based HARQ-ACK codebook determination

If a UE is configured per serving cell with higher layer parameter *CBG-DL = ON,* the UE receives PDSCHs that include code block groups (CBGs) of a transport block. If the UE is configured by higher layer parameter *CBG-DL = ON,* the UE is configured by higher layer parameter *CBGs-per-TB-DL* per serving cell a maximum number $N_{\text{HARQ-ACK}}^{\text{CBG/TB, max}}$ of CBGs for generating respective HARQ-ACK information bits for a transport block reception.

For a number of *C* code blocks (CBs) in a transport block, the UE determines a number of CBGs as $N_{\text{HARQ-ACK}}^{\text{CBG/TB}} = \min\left(N_{\text{HARQ-ACK}}^{\text{CBG/TB, max}}, C\right)$. Each of the first $N_{\text{HARQ-ACK}}^{\text{CBG/TB,1}} = \text{mod}\left(C, N_{\text{HARQ-ACK}}^{\text{CBG/TB}}\right)$ CBGs includes $\left\lceil C / N_{\text{HARQ-ACK}}^{\text{CBG/TB}} \right\rceil$ CBs, where CBG $n_{\text{CBG}}, 0 \leq n_{\text{CBG}} < N_{\text{HARQ-ACK}}^{\text{CBG/TB,1}}$, includes CBs $n_{\text{CBG}} \cdot \left\lceil C / N_{\text{HARQ-ACK}}^{\text{CBG/TB}} \right\rceil + n_{\text{CB}}, 0 \leq n_{\text{CB}} < \left\lceil C / N_{\text{HARQ-ACK}}^{\text{CBG/TB}} \right\rceil$, and each of the last $N_{\text{HARQ-ACK}}^{\text{CBG/TB,2}} = N_{\text{HARQ-ACK}}^{\text{CBG/TB}} - \text{mod}\left(C, N_{\text{HARQ-ACK}}^{\text{CBG/TB}}\right)$ CBGs includes $\left\lfloor C / N_{\text{HARQ-ACK}}^{\text{CBG/TB}} \right\rfloor$ CBs, where CBG $n_{\text{CBG}}, N_{\text{HARQ-ACK}}^{\text{CBG/TB,1}} \leq n_{\text{CBG}} < N_{\text{HARQ-ACK}}^{\text{CBG/TB,1}} + N_{\text{HARQ-ACK}}^{\text{CBG/TB,2}}$, includes CBs $N_{\text{HARQ-ACK}}^{\text{CBG/TB,1}} \cdot \left\lceil C / N_{\text{HARQ-ACK}}^{\text{CBG/TB}} \right\rceil + \left(n_{\text{CBG}} - N_{\text{HARQ-ACK}}^{\text{CBG/TB,1}}\right) \cdot \left\lfloor C / N_{\text{HARQ-ACK}}^{\text{CBG/TB}} \right\rfloor + n_{\text{CB}}, 0 \leq n_{\text{CB}} < \left\lfloor C / N_{\text{HARQ-ACK}}^{\text{CBG/TB}} \right\rfloor$. The UE generates $N_{\text{HARQ-ACK}}^{\text{CBG/TB,1}} + N_{\text{HARQ-ACK}}^{\text{CBG/TB,2}}$ HARQ-ACK information bits through a one-to-one mapping with the $N_{\text{HARQ-ACK}}^{\text{CBG/TB,1}} + N_{\text{HARQ-ACK}}^{\text{CBG/TB,2}}$ CBGs. If the UE receives two transport blocks, the UE concatenates the HARQ-ACK information bits for the second transport block after the HARQ-ACK information bits for the first transport block. The UE generates an ACK for the HARQ-ACK information bit of a CBG if the UE correctly received all code blocks of the CBG and generates a NACK for the HARQ-ACK information bit of a CBG if the UE incorrectly received at least one code block of the CBG.

A retransmission of a transport block to a UE, corresponding to a same HARQ process as a previous transmission of the transport block to the UE, includes the same CBs in a CBG as the initial transmission of the transport block.

If DCI format 1_1 schedules the retransmission of the transport block and includes a CBG transmission information (CBGTI) field of $N_{\text{TB},c}^{\text{DL}} \cdot N_{\text{HARQ-ACK}}^{\text{CBG/TB, max}}$ bits, where $N_{\text{TB},c}^{\text{DL}}$ is the value of higher layer parameter *Number-MCS-HARQ-DL-DCI* of the current active BWP for serving cell *c*, the first $N_{\text{HARQ-ACK}}^{\text{CBG/TB}}$ bits of the CBGTI field for the transport block have a one-to-one mapping with the $N_{\text{HARQ-ACK}}^{\text{CBG/TB}}$ CBGs of the transport block. The UE determines whether or not a CBG is retransmitted based on a corresponding value of the CBGTI field where a binary 1 indicates that a corresponding CBG is retransmitted and a binary 1 indicates that a corresponding CBG is not retransmitted.

If a UE is configured with higher layer parameter *HARQ-ACK-codebook=semi-static,* the HARQ-ACK codebook includes the $N_{\text{HARQ-ACK}}^{\text{CBG/TB, max}}$ HARQ-ACK information bits and, if $N_{\text{HARQ-ACK}}^{\text{CBG/TB}} < N_{\text{HARQ-ACK}}^{\text{CBG/TB, max}}$ for a transport block, the UE generates a NACK value for the last $N_{\text{HARQ-ACK}}^{\text{CBG/TB, max}} - N_{\text{HARQ-ACK}}^{\text{CBG/TB}}$ HARQ-ACK information bits for the transport block in the HARQ-ACK codebook.

If the UE generates a HARQ-ACK codebook in response to a retransmission of a transport block, corresponding to a same HARQ process as a previous transmission of the transport block, the UE generates an ACK for each CBG that the UE correctly decoded in a previous transmission of the transport block.

If a UE correctly detects each of the $N_{\text{HARQ-ACK}}^{\text{CBG/TB}}$ CBGs and does not correctly detect the transport block for the $N_{\text{HARQ-ACK}}^{\text{CBG/TB}}$ CBGs, the UE generates a NACK value for each of the $N_{\text{HARQ-ACK}}^{\text{CBG/TB}}$ CBGs.

- $N_{\text{HARQ-ACK}}^{\text{CBG/TB, max}}$ $N_{\text{HARQ-ACK}}^{\text{CBG/TB, max}}$ 9.1.2 Type-1 HARQ-ACK codebook determination

This subclause applies if the UE is configured with *HARQ-ACK-codebook=semi-static.*

If a UE receives only a PDSCH on the PCell, the UE determines a HARQ-ACK codebook only for the PDSCH. The following procedures for a HARQ-ACK codebook determination apply when the UE does not receive only a PDSCH on the PCell.

- 9.1.2.1 Type-1 HARQ-ACK codebook in physical uplink control channel

For a serving cell *c* and the active DL BWP and the active UL BWP, as described in Subclause 12, the UE determines a set of $M_c$ occasions for candidate PDSCH receptions for which the UE can transmit corresponding HARQ-ACK information in a PUCCH in slot *n*. The determination is based:

**a) on a set** of slot timing values $K_1$ provided by the union of the slot timing values {1, 2, 3, 4, 5, 6, 7, 8} when scheduling is by DCI format 1_0 and the slot timing values provided by higher layer parameter *DL-data-DL-acknowledgement* for scheduling with DCI format 1_1; and

b) when provided, on a set of row indexes of a table provided by higher layer parameter *pdsch-symbolAllocation* and defining respective sets of slot offsets $K_0$, start and length indicators *SLIV,* and PDSCH mapping types for PDSCH reception as described in [6, TS 38.214]; and

c) when provided, on higher layer parameter *UL-DL-configuration-common* and higher layer parameter *UL-DL-configuration-dedicated* as described in Subclause 11.1; and

d) on a PDCCH monitoring periodicity, a PDCCH monitoring offset, and a PDCCH monitoring pattern within a slot for each search space in the set of search spaces configured to the UE for PDCCH candidates corresponding to DCI format 1_0 or DCI format 1_1 for serving cell *c* as described in Subclause 10.1.

For the set of slot timing values $K_1$, the UE determines $M_c$ occasions for candidate PDSCH receptions according to the following pseudo-code.

Set *j* = 0 - index of occasion for candidate PDSCH reception
Set $B = \varnothing$
Set $M_c = \varnothing$
Set $K_{1,C}$ to the cardinality of set $K_1$ Set *k*=0 - index of slot timing values in set $K_1$
while $k < K_{1,C}$
Set *R* to the set of rows provided by *pdsch-symbolAllocation*
Set $R_C$ to the cardinality of *R*,
Set *r* = 0 - index of row provided by *pdsch-symbolAllocation*
while $r < R_C$
if the UE is provided higher layer parameter *UL-DL-configuration-common* or higher layer parameter *UL-DL-configuration-dedicated* and at least one OFDM symbol of the PDSCH time resource derived by row *r* in slot $n-K_{1,k}$ is configured as UL or slot $n-K_{1,k}-K_0$,
where $K_{1,k}$ is the k-th slot timing value in set $K_1$ and $K_0$ is derived by row *r* of *pdsch-symbolAllocation,* does not include at least one configured PDCCH monitoring occasion for PDCCH with DCI format 1_0 or DCI format 1_1

$$R = R \setminus r \; ;$$

end if

$$r = r + 1 \; ;$$

end while
Set $R_C$ to the cardinality of *R*
Set *m* to the smallest last OFDM symbol index, as determined by the *SLIV,* among all rows of *R*
while $R \neq \varnothing$
Set *r* = 0
while $r < R_C$
if $S \leq m$ for start OFDM symbol index *S* for row *r*
$b_{r,k}$ = *j*; - index of occasion for candidate PDSCH reception associated with row *r*

$$R = R \setminus r \; ;$$

$B = B \cup b_{r,k}$;
end if

$$r = r + 1;$$

end while

$$M_c = M_c \cup j;$$

$$j = j + 1;$$

Set *m* to the smallest last OFDM symbol index among all rows of *R*;
end while

$$k = k + 1;$$

end while

For rows of *pdsch-symbolAllocation* associated with a same value of $b_{r,k}$, where $b_{r,k} \in B$, the UE is not expected to receive more than one PDSCH in a same slot.

If an occasion for a candidate PDSCH reception can be in response to a PDCCH with DCI format 1_1 and if higher layer parameter *Number-MCS-HARQ-DL-DCI* indicates reception of two transport blocks, when the UE receives a PDSCH with one transport block, the HARQ-ACK response is associated with the first transport block and the UE generates a NACK for the second transport block if spatial bundling is not applied *(HARQ-ACK-spatial-bundling-PUCCH = FALSE)* and generates HARQ-ACK value of ACK for the second transport block if spatial bundling is applied.

A UE shall determine $\tilde{o}_0^{ACK}, \tilde{o}_1^{ACK}, ..., \tilde{o}_{O^{ACK}-1}^{ACK}$ HARQ-ACK information bits of a HARQ-ACK codebook for transmission in a PUCCH according to the following pseudo-code. In the following pseudo-code, if the UE does not receive a transport block or a CBG, due to the UE not detecting a corresponding PDCCH with DCI format 1_0 or DCI format 1_1, the UE generates a NACK value for the transport block or the CBG.

Set *c* = 0 - serving cell index: lower indices correspond to lower RRC indices of corresponding cell
Set *j* = 0 - HARQ-ACK bit index
Set $N_{cells}^{DL}$ to the number of cells configured by higher layers for the UE
while $c < N_{cells}^{DL}$
Set *m* = 0 - index of occasion for candidate PDSCH reception
while $m < M_c$
if *HARQ-ACK-spatial-bundling-PUCCH = FALSE, CBG-DL = OFF* and the UE is configured by higher layer parameter *Number-MCS-HARQ-DL-DCI* with reception of two transport blocks for the current active BWP on serving cell *c*,

$$\tilde{o}_j^{ACK} = \text{HARQ-ACK} \quad \text{bit corresponding to a first transport block of this cell;}$$

$$j = j + 1;$$

$$\tilde{o}_j^{ACK} = \text{HARQ-ACK} \quad \text{bit corresponding to a second transport block of this cell;}$$

$$j = j + 1;$$

Else if *HARQ-ACK-spatial-bundling-PUCCH = TRUE,* and the UE is configured by higher layer parameter *Number-MCS-HARQ-DL-DCI* with reception of two transport blocks for the current active BWP in serving cell *c*,

$$\tilde{o}_j^{ACK} = \text{binary} \quad \text{AND operation of the HARQ-ACK bits corresponding to first and second transport blocks of this}$$
cell - if the UE receives one transport block, the UE assumes ACK for the second transport block;

$$j = j + 1;$$

elseif *CBG-DL = ON,* and $N_{\mathrm{HARQ-ACK},c}^{\mathrm{CBG/TB,\,max}}$ CBGs indicated by higher layer parameter *CBGs-per-TB-DL* for serving cell *c*,

Set $n_{\mathrm{CBG}}$ = 0 - CBG index

while $n_{\mathrm{CBG}} < N_{\mathrm{HARQ-ACK},c}^{\mathrm{CBG/TB,\,max}}$  $\widetilde{o}_{j+n_{\mathrm{CBG}}}^{ACK}$ = HARQ-ACK  bit corresponding to CBG $n_{\mathrm{CBG}}$ of the first transport block;

if the UE is configured by higher layer parameter *Number-MCS-HARQ-DL-DCI* with reception of two transport blocks for the current active BWP on serving cell *c*

$\widetilde{o}_{j+n_{\mathrm{CBG}}+N_{\mathrm{HARQ-ACK},c}^{\mathrm{CBG/TB,\,max}}}^{ACK}$ = HARQ-ACK  bit corresponding to CBG $n_{\mathrm{CBG}}$ of the second transport block;

end if

$$n_{\mathrm{CBG}} = n_{\mathrm{CBG}} + 1 ;$$

**end while**

$j = j + N_{\mathrm{TB},c}^{\mathrm{DL}} \cdot N_{\mathrm{NARQ-ACK},c}^{\mathrm{CBG/TBmax}}$ , where $N_{\mathrm{TB},c}^{\mathrm{DL}}$ is the value of higher layer parameter *Number-MCS-HARQ-DL-DCI* for the current active BWP for serving cell *c*;

else

$\widetilde{o}_{j}^{ACK}$ = HARQ-ACK  bit of this cell

$$j = j + 1 ;$$

end if

$$m = m + 1 ;$$

end while

$$c = c + 1 ;$$

end while

- 9.1.2.2 Type-1 HARQ-ACK codebook in physical uplink shared channel

If a UE multiplexes HARQ-ACK in a PUSCH transmission that is not scheduled by a DCI format or is scheduled by DCI format 0_0, the UE generates the HARQ-ACK codebook as described in Subclause 9.1.2.1 Type-1 HARQ-ACK codebook in physical uplink control channel except that *HARQ-ACK-spatial-bundling-PUCCH* is replaced by *HARQ-ACK-spatial-bundling-PUSCH.*
If a UE multiplexes HARQ-ACK in a PUSCH transmission that is scheduled by DCI format 0_1, the UE generates the HARQ-ACK codebook as described in Subclause 9.1.2.1 Type-1 HARQ-ACK codebook in physical uplink control channel when a value of the DAI field in DCI format 0_1 is $V_{T-DAI,m}^{UL} = 1$ . The UE does not generate a HARQ-ACK codebook for multiplexing in the PUSCH transmission when $V_{T-DAI,m}^{UL} = 0$ .

- 9.1.3 Type-2 HARQ-ACK codebook determination

This subclause applies if the UE is configured with *HARQ-ACK-codebook-dynamic.*

- 9.1.3.1 Type-2 HARQ-ACK codebook in physical uplink control channel

Based on maximum and minimum PDSCH-to-HARQ_feedback timing values provided to a UE by higher layer parameter *DL-data-DL-acknowledgement,* the UE determines monitoring occasions for PDCCH with DCI format 1_0 or DCI format 1_1 for scheduling PDSCH receptions or DL SPS release on a serving cell *c* and for which the UE transmits HARQ-ACK in a same PUCCH based on respective PDSCH-to-HARQ_feedback timing values. The PDCCH monitoring occasions for PDSCH scheduling on serving cell *c* are determined based on the PDCCH monitoring periodicity, the PDCCH monitoring offset, and the PDCCH monitoring pattern within a slot for each search space in the set of search spaces configured to the UE for PDCCH candidates corresponding to DCI format 1_0 or DCI format 1_1 for serving cell *c*. The set of PDCCH monitoring occasions is defined as the union of PDCCH monitoring occasions across configured cells, ordered in ascending order of start time of the search space associated with a PDCCH monitoring occasion. The cardinality of the set of PDCCH monitoring occasions defines a total number *M* of PDCCH monitoring occasions.

A value of the counter downlink assignment indicator (DAI) field in DCI format 1_0 or DCI format 1_1 denotes the accumulative number of {serving cell, PDCCH monitoring occasion}-pair(s) in which PDSCH reception(s) associated with DCI format 1_0 or DCI format 1_1 or DCI format 1_0 indicating downlink SPS release is present, up to the current serving cell and current PDCCH monitoring occasion, first in increasing order of serving cell index and then in increasing order of PDCCH monitoring occasion index *m*, where $0 \leq m < M$.

The value of the total DAI, when present [5, TS 38.212], in DCI format 1_1 denotes the total number of {serving cell, PDCCH monitoring occasion}-pair(s) in which PDSCH reception(s) associated with DCI format 1_0 or DCI format 1_1 or associated with DCI format 1_0 indicating downlink SPS release is present, up to the current PDCCH monitoring occasion *m* and shall be updated from PDCCH monitoring occasion to PDCCH monitoring occasion.

Denote $V_{\mathrm{C-DAI},c,m}^{\mathrm{DL}}$ as the value of the counter DAI in DCI format 1_0 or DCI format 1_1 scheduling PDSCH reception or indicating downlink SPS release for serving cell *c* in PDCCH monitoring occasion *m* according to Table 9.1.3-1.

Denote $V_{\mathrm{T-DAI},m}^{\mathrm{DL}}$ as the value of the total DAI DCI format 1_1 scheduling PDSCH reception or indicating downlink SPS release in PDCCH monitoring occasion *m* according to Table 9.1.3-1. The UE shall assume a same value of total DAI in all DCI formats DCI format 1_1 scheduling PDSCH reception(s) and DCI format 1_0 indicating downlink SPS release in PDCCH monitoring occasion *m*

If the UE transmits HARQ-ACK in a PUCCH with PUCCH format 2 or PUCCH format 3 or PUCCH format 4, the UE shall determine the $\widetilde{o}_0^{ACK}, \widetilde{o}_1^{ACK}, ..., \widetilde{o}_{O^{ACK}-1}^{ACK}$ according to the following pseudo-code:

Set *c* = 0 - serving cell index: lower indices correspond to lower RRC indices of corresponding cell

Set *m* = 0 - PDCCH with DCI format 1_0 or DCI format 1_1 monitoring occasion index: lower index corresponds to earlier PDCCH with DCI format 1_0 or DCI format 1_1 monitoring occasion

Set *j* = 0

Set $V_{emp}$ = 0

Set $V_{temp2}$ = 0

Set $V_s$ = $\varnothing$

Set $N_{cells}^{DL}$ to the number of cells configured by higher layers for the UE

Set *M* to the number of PDCCH monitoring occasion(s)
while *m* < *M*

while $c < N_{cells}^{DL}$

if there is a PDSCH on serving cell *c* associated with PDCCH in PDCCH monitoring occasion *m*, or there is a PDCCH indicating downlink SPS release on serving cell *c*

$$\text{if } V_{C-DAI,c,m}^{DL} \leq V_{temp}$$

$$j = j + 1$$

$$\text{end if}$$

$$V_{temp} = V_{C-DAI,c,m}^{DL}$$

$$\text{if } V_{T-DAI,m}^{DL} = \varnothing$$

$$V_{temp2} = V_{C-DAI,c,m}^{DL}$$

$$\text{else}$$

$$V_{temp2} = V_{T-DAI,m}^{DL}$$

if the higher layer parameter *HARQ-ACK-spatial-bundling-PUCCH = FALSE* and *m* is a monitoring occasion for PDCCH with DCI format 1_0 or DCI format 1_1 and the UE is configured by higher layer parameter *Number-MCS-HARQ-DL-DCI* with reception of two transport blocks in the current active BWP in at least one configured serving cell,

$$\tilde{o}_{8j+2\left(V_{C-DAI,c,m}^{DL}-1\right)}^{ACK} = \text{HARQ-ACK} \text{ bit corresponding to the first transport block of this cell}$$

$$\tilde{o}_{8j+2\left(V_{C-DAI,c,m}^{DL}-1\right)+1}^{ACK} = \text{HARQ-ACK} \text{ bit corresponding to the second transport block of this cell}$$

$$V_s = V_s \cup \left\{ 8j + 2\left(V_{C-DAI,c,m}^{DL}-1\right), 8j + 2\left(V_{C-DAI,c,m}^{DL}-1\right)+1\right\}$$

elseif the higher layer parameter *HARQ-ACK-spatial-bundling-PUCCH = TRUE* and *m* is a monitoring occasion for PDCCH with DCI format 1_1 and the UE is configured by higher layer parameter *Number-MCS-HARQ-DL-DCI* with reception of two transport blocks in the current active BWP in at least one configured serving cell,

$$\tilde{o}_{4j+V_{C-DAI,c,m}^{DL}-1}^{ACK} = \text{binary} \text{ AND operation of the HARQ-ACK bits corresponding to the first and second transport}$$

blocks of this cell

$$V_s = V_s \cup \left\{ 4j + V_{C-DAI,c,m}^{DL}-1\right\}$$

$$\text{else}$$

$$\tilde{o}_{4j+V_{C-DAI,c,m}^{DL}-1}^{ACK} = \text{HARQ-ACK bit of this cell}$$

$$V_s = V_s \cup \left\{ 4j + V_{C-DAI,c,m}^{DL} - 1 \right\}$$

$$\text{end if}$$

$$c = c + 1$$

$$\text{end while}$$

$$m = m + 1$$

$$\text{end while}$$

$$\text{if } V_{temp2} < V_{temp}$$

$$j = j + 1$$

$$\text{end if}$$

if the higher layer parameter *HARQ-ACK-spatial-bundling-PUCCH = FALSE* and *m* is a monitoring occasion for PDCCH with DCI format 1_0 or DCI format 1_1 and the UE is configured by higher layer parameter *Number-MCS-HARQ-DL-DCI* with reception of two transport blocks in the current active BWP in at least one configured serving cell,

$$O^{ACK} = 2 \cdot \left( 4 \cdot j + V_{temp2} \right)$$

else

$$O^{ACK} = 4 \cdot j + V_{temp2}$$

$$\tilde{o}_i^{ACK} = \text{NACK} \quad \text{for any} \quad i \in \left\{ 0,1,...,O^{ACK} - 1 \right\} \setminus V_s$$

Set *c* = 0

while $c < N_{cells}^{DL}$

if SPS PDSCH transmission is activated for a UE and the UE is configured to receive SPS PDSCH in a slot within the *M* monitoring occasions for serving cell *c* $O^{ACK} = O^{ACK} + 1$

$$o_{O^{ACK} - 1}^{ACK} = \text{HARQ-ACK} \quad \text{bit associated with the SPS PDSCH reception}$$

end if

$$c = c + 1 \; ;$$

end while

For a monitoring occasion of a PDCCH with DCI format 1_0 or DCI format 1_1 in at least one serving cell, when a UE receives a PDSCH with one transport block and the value of higher layer parameter *Number-MCS-HARQ-DL-DCI* is 2, the HARQ-ACK response is associated with the first transport block and the UE generates a NACK for the second transport block if spatial bundling is not applied *(HARQ-ACK-spatial-bundling-PUCCH = FALSE)* and generates HARQ-ACK value of ACK for the second transport block if spatial bundling is applied.

If a UE transmits HARQ-ACK using PUCCH format 2 or PUCCH format 3 or PUCCH format 4 and the UE is configured with

- higher layer parameter *HARQ-ACK-codebook=dynamic*;

- higher layer parameter *CBG-DL = ON* for $N_{\text{cells}}^{\text{DL,CBG}}$ serving cells; and

- higher layer parameter *CBG-DL = OFF,* or is not configured with higher layer parameter *CBG-DL,* for $N_{\text{cells}}^{\text{DL,TB}}$ serving cells where $N_{\text{cells}}^{\text{DL,TB}} + N_{\text{cells}}^{\text{DL,CBG}} = N_{\text{cells}}^{\text{DL}}$ the UE shall determine the $\tilde{o}_0^{ACK}, \tilde{o}_1^{ACK}, ..., \tilde{o}_{O^{ACK}-1}^{ACK}$ according to the previous pseudo-code with the following modifications

- $N_{\text{cells}}^{\text{DL,TB}}$ is used for the determination of a first HARQ-ACK sub-codebook for TB-based PDSCH receptions;

- $N_{\text{cells}}^{\text{DL}}$ is replaced by $N_{\text{cells}}^{\text{DL,CBG}}$ for the determination of a second HARQ-ACK sub-codebook corresponding to the $N_{\text{cells}}^{\text{DL,CBG}}$ serving cells for CBG-based PDSCH receptions, and

  ○ Instead of generating one HARQ-ACK information bit per transport block for a serving cell from the $N_{\text{cells}}^{\text{DL,CBG}}$ serving cells, the UE generates $N_{\text{HARQ–ACK,max}}^{\text{CBG/TB, max}}$ HARQ-ACK information bits, where $N_{\text{HARQ–ACK,max}}^{\text{CBG/TB, max}}$ is the maximum value of $N_{\text{TB},c}^{\text{DL}} \cdot N_{\text{HARQ–ACK},c}^{\text{CBG/TB, max}}$ across all $N_{\text{cells}}^{\text{DL,CBG}}$ serving cells where $N_{\text{TB},c}^{\text{DL}}$ is the value of higher layer parameter *Number-MCS-HARQ-DL-DCI* of the current active BWP for serving cell *c*. If for a serving cell *c* it is $N_{\text{TB},c}^{\text{DL}} \cdot N_{\text{HARQ–ACK},c}^{\text{CBG/TB, max}} < N_{\text{HARQ–ACK,max}}^{\text{CBG/TB, max}}$, the UE generates NACK for the last $N_{\text{HARQ–ACK,max}}^{\text{CBG/TB, max}} - N_{\text{TB},c}^{\text{DL}} \cdot N_{\text{HARQ–ACK},c}^{\text{CBG/TB, max}}$ HARQ-ACK information bits for serving cell *c*.
  ○ The pseudo-code operation for *HARQ-ACK-spatial-bundling-PUCCH = TRUE* is not applicable;

- The UE generates the HARQ-ACK codebook by appending the second HARQ-ACK sub-codebook to the first HARQ-ACK sub-codebook.

- If a UE receives a PDSCH that is scheduled by a PDCCH with DCI format 1_0, the UE repeats $N_{\text{HARQ–ACK}}^{\text{CBG/TB, max}}$ times the HARQ-ACK information for the transport block in the PDSCH for generating $N_{\text{HARQ–ACK}}^{\text{CBG/TB, max}}$ HARQ-ACK information bits.

**Table 9.1.3-1: Value of counter DAI in DCI format 1_0 and of counter DAI or total DAI DCI format 1_1**

| DAI MSB, LSB | $V_{C–DAI}^{DL}$ or $V_{T–DAI}^{DL}$ | Number of {serving cell, PDCCH monitoring occasion}-pair(s) in which PDSCH transmission(s) associated with PDCCH or PDCCH indicating downlink SPS release is present, denoted as *Y* and $Y \geq 1$ |
|---|---|---|
| 0,0 | 1 | (*Y* - 1)mod 4 + 1 = 1 |
| 0,1 | 2 | (*Y* -1)mod 4 + 1 = 2 |
| 1,0 | 3 | (*Y* - 1)mod 4 +1 = 3 |
| 1,1 | 4 | (*Y* - 1)mod 4 +1 = 4 |

- 9.1.3.2 Type-2 HARQ-ACK codebook in physical uplink shared channel

If a UE multiplexes HARQ-ACK in a PUSCH transmission that is not scheduled by a DCI format or is scheduled by DCI format 0_0, the UE generates the HARQ-ACK codebook as described in Subclause 9.1.3.1 Type-2 HARQ-ACK codebook in , except that *HARQ-ACK-spatial-bundling-PUCCH* is replaced by *HARQ-ACK-spatial-bundling-PUSCH.*
If a UE multiplexes HARQ-ACK in a PUSCH transmission that is scheduled by DCI format 0_1, the UE generates the HARQ-ACK codebook as described in Subclause 9.1.3.1 Type-2 HARQ-ACK codebook in , with the following modifications:

- For $0 \leq m < M$-1, $V_{T–DAI,m}^{DL} = \varnothing$ and for $m = M$-1, $V_{T–DAI,m}^{DL}$ is replaced by $V_{T–DAI,m}^{UL}$ where $V_{T–DAI,m}^{UL}$ is the value of the DAI field in DCI format 0_1 according to Table 9.1.3-2

∘ For the case of first and second HARQ-ACK sub-codebooks, DCI format 0_1 includes a first DAI field corresponding to the first HARQ-ACK sub-codebook and a second DAI field corresponding to the second HARQ-ACK sub-codebook

∘ HARQ-ACK-spatial-bundling-PUCCH is replaced by HARQ-ACK-spatial-bundling-PUSCH.

### 1. Table 9.1.3-2: Value of DAI in DCI format 0_1

| DAI MSB, LSB | $V^{UL}_{T-DAI}$ | Number of {serving cell, PDCCH monitoring occasion}-pair(s) in which PDSCH transmission(s) associated with PDCCH or PDCCH indicating downlink SPS release is present, denoted as $X$ and $X \geq 1$ |
|---|---|---|
| 0,0 | 1 | $(X-1)\bmod 4 + 1 = 1$ |
| 0,1 | 2 | $(X-1)\bmod 4 + 1 = 2$ |
| 1,0 | 3 | $(X-1)\bmod 4 + 1 = 3$ |
| 1,1 | 4 | $(X-1)\bmod 4 + 1 = 4$ |

--------------------<End of Text Proposal>----------------------------------

### 4.0 Conclusions

In this contribution we discuss aspects related to carrier aggregation with different numerologies and HARQ codebook construction. The following proposals are made and related text proposals are presented:

### Carrier aggregation with different numerologies

**Proposal 1-1:** k in section 9.2.3 in 38.213 should be expressed in the numerology of the serving cell on which the PUCCH is transmitted on.

**Proposal 1-2:** Cross-carrier scheduling from a lower numerology to a higher numerology is not supported in Rel-15.

### HARQ codebook

**Proposal 2-1:** As soon as PUSCH and PUCCH overlap with at least one symbol, PUCCH is dropped. If dropped PUCCH and PUSCH share the same starting symbol UCI can be piggy-backed on PUSCH.

**Proposal 2-2:** If UE is scheduled by fallback DCI 1_0 and is configured with a semi-statically configured HARQ codebook, the UE reports HARQ feedback according to its CBG configuration (and not N times the TB-based HARQ feedback).

**Proposal 2-3:** Clarify that parameter *Number-MCS-HARQ-DL-DCI* is configured per BWP and not per cell.

**Proposal 2-4:** The TB-based HARQ sub-codebook for HARQ feedback with CBG configuration should be determined based on .

**Proposal 2-5:** Feedback for a PDCCH indicating SPS release detected on a cell with CBG configuration is added to the TB-based HARQ sub-codebook.

**Proposal 2-6:** Prior RRC configuration, the UE assumes a dynamic HARQ codebook.

**Proposal 2-7:** HARQ association set does not depend on PDCCH configuration. **Proposal 2-8:** Decouple semi-statically configured HARQ codebook size from pdsch-symbolAllocation.

**Proposal 2-9:** Add one bit to the semi-statically configured HARQ codebook for PDCCH indicating SPS release. This bit is added in case any of the cells included in the HARQ codebook is configured with SPS.

In some embodiments a computer program, computer program product or computer readable storage medium comprises instructions which when executed on a computer perform any of the embodiments disclosed herein. In further examples the instructions are carried on a signal or carrier and which are executable on a computer wherein when executed perform any of the embodiments disclosed herein.

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods described herein without departing from the scope of the disclosure. The methods may include more, fewer, or other steps. Additionally, steps may be performed in any suitable order.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the following claims.

**Claims**

1. A method by a wireless device (110) for generating Hybrid Automatic Repeat ReQuest-Acknowledgement, HARQ-ACK, bits associated with Semi-Persistent Scheduling, SPS, release, the method comprising:

   determining that a SPS release is associated with a cell that has Code Book Group, CBG, feedback configured for the cell, wherein the CBG feedback is HARQ feedback per group of code blocks of a transport block; and placing at least one HARQ-ACK bit associated with the SPS release within a transport block-based sub-codebook of a codebook, wherein the determining that the SPS release is associated with the cell that has CBG feedback configured for the cell comprises:

      the at least one HARQ-ACK bit comprises two HARQ-ACK bits when the wireless device is configured more than four layers on the cell, or
      the at least one HARQ-ACK bit comprises one HARQ-ACK bit when the wireless device is configured with four or fewer layers on the cell,.
      receiving, from a network node (160), a first message configuring the wireless device for CBG feedback for the cell; and
      receiving, from the network node, a second message that indicates that the SPS release is associated with the cell.

2. The method of Claim 1, wherein the codebook further comprises a CBG-based sub-codebook of the codebook.

3. The method of any one of Claims 1 to 2, further comprising generating at least one HARQ-ACK bit per SPS release.

4. The method of any one of Claims 1 to 3, further comprising receiving a Downlink Assignment Index, DAI, from a network node, the DAI being updated based on the SPS release.

5. The method of any one of Claims 1 to 4, further comprising associating at least one Downlink Assignment Indicator, DAI, value contained in a physical downlink control channel, PDCCH, with the TB-based HARQ sub-codebook of the codebook, the PDCCH being the PDCCH that carries the SPS release.

6. The method of any one of Claims 1 to 5, wherein the at least one HARQ-ACK bit comprises a configured and/or pre-defined value of reserved bits.

7. A wireless device (110) for generating Hybrid Automatic Repeat ReQuest-Acknowledgement, HARQ-ACK, bits associated with Semi-Persistent Scheduling, SPS, release, the wireless device comprising:

   processing circuitry (120) configured to:
   determine that a SPS release is associated with a cell that has Code Book Group, CBG, feedback configured for the cell, wherein the CBG feedback is HARQ feedback per group of code blocks of a transport block; and place at least one HARQ-ACK bit associated with the SPS release within a transport block-based sub-codebook of a codebook, wherein when determining that the SPS release is associated with the cell that has CBG feedback configured for the cell, the processing circuitry is configured to:

      the at least one HARQ-ACK bit comprises two HARQ-ACK bits when the wireless device is configured more than four layers on the cell, or
      the at least one HARQ-ACK bit comprises one HARQ-ACK bit when the wireless device is configured with four or fewer layers on the cell,

receive, from a network node (160), a first message configuring the wireless device for CBG feedback for the cell; and

receive, from the network node, a second message that indicates that the SPS release is associated with the cell.

8. The wireless device of Claim 7, wherein the codebook further comprises a CBG-based sub-codebook of the codebook.

9. The wireless device of any one of Claims 7 to 8, wherein the processing circuitry is further configured to generate at least one HARQ-ACK bit per SPS release.

10. The wireless device of any one of Claims 7 to 9, wherein the processing circuitry is further configured to receive a Downlink Assignment Index, DAI, from a network node, the DAI being updated based on the SPS release.

11. The wireless device of any one of Claims 7 to 10, wherein the processing circuitry is configured to associate at least one Downlink Assignment Indicator, DAI, value contained in a physical downlink control channel, PDCCH, with the TB-based HARQ sub-codebook of the codebook, the PDCCH being the PDCCH that carries the SPS release.

12. The wireless device of any one of Claims 7 to 11, wherein the at least one HARQ-ACK bit comprises a configured and/or pre-defined value of reserved bits.

**Patentansprüche**

1. Verfahren durch eine drahtlose Vorrichtung (110) zum Erzeugen von Hybrid Automatic Repeat ReQuest-Bestätigungsbits, HARQ-ACK-Bits, die mit einer Semi-Persistent Scheduling-Freigabe, SPS-Freigabe, assoziiert sind, wobei das Verfahren Folgendes umfasst:

Bestimmen, dass eine SPS-Freigabe mit einer Zelle assoziiert ist, die Code Book Group-Rückmeldung, CBG-Rückmeldung, aufweist, die für die Zelle konfiguriert ist, wobei die CBG-Rückmeldung eine HARQ-Rückmeldung pro Gruppe von Codeblöcken eines Transportblocks ist; und

Platzieren mindestens eines HARQ-ACK-Bits, das mit der SPS-Freigabe assoziiert ist, in einem transportblockbasierten Subcodebuch eines Codebuchs, wobei das Bestimmen, dass die SPS-Freigabe mit der Zelle assoziiert ist, die CBG-Rückmeldung aufweist, die für die Zelle konfiguriert ist, Folgendes umfasst:

das mindestens eine HARQ-ACK-Bit umfasst zwei HARQ-ACK-Bits, wenn die drahtlose Vorrichtung mit mehr als vier Schichten in der Zelle konfiguriert ist, oder

das mindestens eine HARQ-ACK-Bit umfasst ein HARQ-ACK-Bit, wenn die drahtlose Vorrichtung mit vier oder weniger Schichten in der Zelle konfiguriert ist,

Empfangen einer ersten Nachricht von einem Netzwerkknoten (160), die die drahtlose Vorrichtung für CBG-Rückmeldung für die Zelle konfiguriert; und Empfangen einer zweiten Nachricht von dem Netzwerkknoten, die angibt, dass die SPS-Freigabe mit der Zelle assoziiert ist.

2. Verfahren nach Anspruch 1, wobei das Codebuch ferner ein CBG-basiertes Subcodebuch des Codebuchs umfasst.

3. Verfahren nach einem der Ansprüche 1 bis 2, ferner umfassend Erzeugen mindestens eines HARQ-ACK-Bits pro SPS-Freigabe.

4. Verfahren nach einem der Ansprüche 1 bis 3, ferner umfassend Empfangen eines Downlink-Zuordnungsindex, DAI, von einem Netzwerkknoten, wobei der DAI basierend auf der SPS-Freigabe aktualisiert wird.

5. Verfahren nach einem der Ansprüche 1 bis 4, ferner umfassend Assoziieren mindestens eines Downlink-Zuordnungsindexwerts, DAI-Werts, der in einem Physical Downlink Control Channel, PDCCH, enthalten ist, mit dem TB-basierten HARQ-Subcodebuch des Codebuchs, wobei der PDCCH der PDCCH ist, der die SPS-Freigabe überträgt.

6. Verfahren nach einem der Ansprüche 1 bis 5, wobei das mindestens eine HARQ-ACK-Bit einen konfigurierten und/oder vordefinierten Wert reservierter Bits umfasst.

7. Drahtlose Vorrichtung (110) zum Erzeugen von Hybrid Automatic Repeat ReQuest-Bestätigungsbits, HARQ-ACK-Bits, die mit einer Semi-Persistent Scheduling-Freigabe, SPS-Freigabe, assoziiert sind, wobei die drahtlose Vorrichtung Folgendes umfasst:
Verarbeitungsschaltungsanordnung (120), die zu Folgendem konfiguriert ist:

Bestimmen, dass eine SPS-Freigabe mit einer Zelle assoziiert ist, die Code Book Group-Rückmeldung, CBG-Rückmeldung, aufweist, die für die Zelle konfiguriert ist, wobei die CBG-Rückmeldung eine HARQ-Rückmeldung pro Gruppe von Codeblöcken eines Transportblocks ist; und
Platzieren mindestens eines HARQ-ACK-Bits, das mit der SPS-Freigabe assoziiert ist, in einem transportblockbasierten Subcodebuch eines Codebuchs, wobei beim Bestimmen, dass die SPS-Freigabe mit der Zelle assoziiert ist, die CBG-Rückmeldung aufweist, die für die Zelle konfiguriert ist, die Verarbeitungsschaltungsanordnung zu Folgendem konfiguriert ist:

das mindestens eine HARQ-ACK-Bit umfasst zwei HARQ-ACK-Bits, wenn die drahtlose Vorrichtung mit mehr als vier Schichten in der Zelle konfiguriert ist, oder
das mindestens eine HARQ-ACK-Bit umfasst ein HARQ-ACK-Bit, wenn die drahtlose Vorrichtung mit vier oder weniger Schichten in der Zelle konfiguriert ist,
Empfangen einer ersten Nachricht von einem Netzwerkknoten (160), die die drahtlose Vorrichtung für CBG-Rückmeldung für die Zelle konfiguriert; und
Empfangen einer zweiten Nachricht von dem Netzwerkknoten, die angibt, dass die SPS-Freigabe mit der Zelle assoziiert ist.

8. Drahtlose Vorrichtung nach Anspruch 7, wobei das Codebuch ferner ein CBG-basiertes Subcodebuch des Codebuchs umfasst.

9. Drahtlose Vorrichtung nach einem der Ansprüche 7 bis 8, wobei die Verarbeitungsschaltungsanordnung ferner dazu konfiguriert ist, mindestens ein HARQ-ACK-Bit pro SPS-Freigabe zu erzeugen.

10. Drahtlose Vorrichtung nach einem der Ansprüche 7 bis 9, wobei die Verarbeitungsschaltungsanordnung ferner dazu konfiguriert ist, einen Downlink-Zuordnungsindex, DAI, von einem Netzwerkknoten zu empfangen, wobei der DAI basierend auf der SPS-Freigabe aktualisiert wird.

11. Drahtlose Vorrichtung nach einem der Ansprüche 7 bis 10, wobei die Verarbeitungsschaltungsanordnung ferner dazu konfiguriert ist, mindestens einen Downlink-Zuordnungsindexwert, DAI-Wert, der in einem Physical Downlink Control Channel, PDCCH, enthalten ist, mit dem TB-basierten HARQ-Subcodebuch des Codebuchs zu assoziieren, wobei der PDCCH der PDCCH ist, der die SPS-Freigabe überträgt.

12. Drahtlose Vorrichtung nach einem der Ansprüche 7 bis 11, wobei das mindestens eine HARQ-ACK-Bit einen konfigurierten und/oder vordefinierten Wert reservierter Bits umfasst.


**Revendications**

1. Procédé par un dispositif sans fil (110) pour générer des bits d'accusé de réception de demande de répétition automatique hybride, HARQ-ACK, associés à une libération de planification semi-persistante, SPS, le procédé comprenant :

la détermination qu'une libération SPS est associée à une cellule qui présente une rétroaction de groupe de livres de code, CBG, configurée pour la cellule, dans lequel la rétroaction CBG est une rétroaction HARQ par groupe de blocs de code d'un bloc de transport ; et
le placement d'au moins un bit HARQ-ACK associé à la libération SPS à l'intérieur d'un sous-livre de code basé sur bloc de transport d'un livre de code, dans lequel la détermination que la libération SPS est associée à la cellule qui présente une rétroaction CBG configurée pour la cellule comprend :

l'au moins un bit HARQ-ACK comprend deux bits HARQ-ACK lorsque le dispositif sans fil est configuré avec plus de quatre couches sur la cellule, ou
l'au moins un bit HARQ-ACK comprend un bit HARQ-ACK lorsque le dispositif sans fil est configuré avec quatre couches ou moins sur la cellule,

la réception, depuis un nœud de réseau (160), d'un premier message configurant le dispositif sans fil pour une rétroaction CBG pour la cellule ; et

la réception, depuis le nœud de réseau, d'un deuxième message qui indique que la libération SPS est associée à la cellule.

2. Procédé selon la revendication 1, dans lequel le livre de code comprend en outre un sous-livre de code basé sur CBG du livre de code.

3. Procédé selon l'une quelconque des revendications 1 et 2, comprenant en outre la génération d'au moins un bit HARQ-ACK par libération SPS.

4. Procédé selon l'une quelconque des revendications 1 à 3, comprenant en outre la réception d'un indice d'attribution de liaison descendante, DAI, depuis un nœud de réseau, le DAI étant mis à jour sur la base de la libération SPS.

5. Procédé selon l'une quelconque des revendications 1 à 4, comprenant en outre l'association d'au moins une valeur d'indicateur d'attribution de liaison descendante, DAI, contenue dans un canal de commande de liaison descendante physique, PDCCH, au sous-livre de code HARQ basé sur TB du livre de code, le PDCCH étant le PDCCH qui porte la libération SPS.

6. Procédé selon l'une quelconque des revendications 1 à 5, dans lequel l'au moins un bit HARQ-ACK comprend une valeur configurée et/ou prédéfinie de bits réservés.

7. Dispositif sans fil (110) pour générer des bits d'accusé de réception de demande de répétition automatique hybride, HARQ-ACK, associés à une libération de planification semi-persistante, SPS, le dispositif sans fil comprenant :
une circuiterie de traitement (120) configurée pour :

déterminer qu'une libération SPS est associée à une cellule qui présente une rétroaction de groupe de livres de code, CBG, configurée pour la cellule, dans lequel la rétroaction CBG est une rétroaction HARQ par groupe de blocs de code d'un bloc de transport ; et

placer au moins un bit HARQ-ACK associé à la libération SPS à l'intérieur d'un sous-livre de code basé sur bloc de transport d'un livre de code, dans lequel, lors de la détermination que la libération SPS est associée à la cellule qui présente une rétroaction CBG configurée pour la cellule, la circuiterie de traitement est configurée pour :

l'au moins un bit HARQ-ACK comprend deux bits HARQ-ACK lorsque le dispositif sans fil est configuré avec plus de quatre couches sur la cellule, ou

l'au moins un bit HARQ-ACK comprend un bit HARQ-ACK lorsque le dispositif sans fil est configuré avec quatre couches ou moins sur la cellule,

recevoir, depuis un nœud de réseau (160), un premier message configurant le dispositif sans fil pour une rétroaction CBG pour la cellule ; et

recevoir, depuis le nœud de réseau, un deuxième message qui indique que la libération SPS est associée à la cellule.

8. Dispositif sans fil selon la revendication 7, dans lequel le livre de code comprend en outre un sous-livre de code basé sur CBG du livre de code.

9. Dispositif sans fil selon l'une quelconque des revendications 7 et 8, dans lequel la circuiterie de traitement est en outre configurée pour générer au moins un bit HARQ-ACK par libération SPS.

10. Dispositif sans fil selon l'une quelconque des revendications 7 à 9, dans lequel la circuiterie de traitement est en outre configurée pour recevoir un indice d'attribution de liaison descendante, DAI, depuis un nœud de réseau, le DAI étant mis à jour sur la base de la libération SPS.

11. Dispositif sans fil selon l'une quelconque des revendications 7 à 10, dans lequel la circuiterie de traitement est configurée pour associer au moins une valeur d'indicateur d'attribution de liaison descendante, DAI, contenue dans un canal de commande de liaison descendante physique, PDCCH, au sous-livre de code HARQ basé sur TB du livre de code, le PDCCH étant le PDCCH qui porte la libération SPS.

**12.** Dispositif sans fil selon l'une quelconque des revendications 7 à 11, dans lequel l'au moins un bit HARQ-ACK comprend une valeur configurée et/ou prédéfinie de bits réservés.

PDCCH

| 4,4 | PDSCH | 8,8 | PDSCH | 10,10 | PDSCH | |
| 3,4 | PDSCH | 7,8 | PDSCH | | | |
| 2,4 | PDSCH | 6,8 | PDSCH | | | |
| 1,4 | PDSCH | 5,8 | PDSCH | 9,10 | PDSCH | 11,11 | PDSCH |

Total DAI: Incremented by 1 for each assignment, counts all assignments up to this slot (=highest Counter DAI in the slot)

Counter DAI: Incremented by 1 for each assignment up to this assignment

FIGURE 1

FIGURE 2

FIGURE 3

FIGURE 4

162
Antenna(s)

160 Network Node

192 Radio Front
End Circuitry

198 Filter(s)

196
Amplifier(s)

194 Port(s)/
Terminal(s)

190
Interface

172 RF Transceiver Circuitry

187
Power
Circuitry

174 Baseband
Circuitry

170 Processing
Circuitry

180 Device Readable Medium

184 Auxiliary Equipment

186 Power Source

FIGURE 5

FIGURE 6

200

- 201 Processor
- 205 Input/Output Interface
- 209 RF Interface
- 211 Network Connection Interface
- 213 Power Source
- 202 Bus
- 215 Memory
  - 217 RAM
  - 219 ROM
  - 221 Storage Medium
    - 223 Operating System
    - 225 Application Program
    - 227 Data
- 231 Communication Subsystem
  - 233 Transmitter
  - 235 Receiver
- 243a Network
- 243b Network

FIGURE 7

FIGURE 8

EP 3 753 162 B1

FIGURE 9

500

510 Host computer

511
SW

512
Host application

515
HW

Communication
Interface

516

518

Processing
circuitry

560

520 Base Station

521
SW

525
HW

Communication
Interface
526

Radio
Interface
527

Processing
circuitry
528

530 Host computer

531
SW

532
Client application

535
HW

537
Radio Interface

Processing
circuitry
538

550

570

FIGURE 10

BEGIN

610
Host computer provides user data

611
Host computer executes host application

620
Host computer initiates transmission carrying the user data to the UE

630
Base station transmits the user data

640
UE executes client application

END

**FIGURE 11**

BEGIN

710
Host computer provides user data

720
Host computer initiates transmission carrying the user data to the UE

730
UE receives the user data

END

**FIGURE 12**

FIGURE 13

FIGURE 14

1000

Start

1002

Determine that a SPS release is associated with a cell that has
Code Book Group (CBG) feedback configured for the cell

1004

Place at least one HARQ-ACK bit associated with the SPS release
within a codebook

1006

Optionally, the codebook is a CBG-based codebook or a TB-based
sub-codebook, and optionally, at least one HARQ-ACK bit
comprises a configured and/or predefined value of reserved bits

End

FIGURE 15

1100

Start

1102

Determine that a SPS release is associated with a cell that has Code Book Group (CBG) feedback configured for the cell

1104

Place at least one HARQ-ACK bit associated with the SPS release within a TB-based sub-codebook of a codebook

End

FIGURE 16

1200

Determining
Unit
1202

Placing
Unit
1204

FIGURE 17

1300

Start

1302

Transmit, to a wireless device, an indication that a SPS release is associated with a cell that has CBG feedback configured for the cell

1304

Release, from the wireless device, at least one HARQ-ACK bit associated with the SPS release within a TB-based sub-codebook of a codebook

End

FIGURE 18

1400

Transmitting Unit 1402

Releasing Unit 1404

FIGURE 19

FIGURE 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP 38.213, V15.0.0*, February 2018